# EUROPEAN PATENT SPECIFICATION

(11) **EP 3 070 654 B1**
(45) Date of publication and mention of the grant of the patent: **08.05.2019**
(21) Application number: 16160614.0
(22) Date of filing: 16.03.2016
(51) Int. Cl.: G06Q 10/06, G06Q 10/02, G06Q 50/12

(54) **INFORMATION PROCESSING APPARATUS, VACANCY INFORMATION PROVIDING PROGRAM, AND METHOD OF PROVIDING VACANCY INFORMATION**
INFORMATIONSVERARBEITUNGSVORRICHTUNG, FREISTELLENINFORMATIONSBEREITSTELLUNGSPROGRAMM UND VERFAHREN ZUR BEREITSTELLUNG VON FREISTELLENINFORMATIONEN
APPAREIL DE TRAITEMENT D'INFORMATIONS, PROGRAMME ET PROCÉDÉ DE FOURNITURE D'INFORMATIONS D'ESPACE VIDE

(30) Priority: 20.03.2015 JP 2015058022; 13.01.2016 JP 2016004182
(43) Date of publication of application: 21.09.2016
(73) Proprietor: Ricoh Company, Ltd., Tokyo 143-8555 (JP)
(72) Inventor: MORITA, Nobuhiro, Ohta-ku, Tokyo 143-8555 (JP); KIZAKI, Osamu, Ohta-ku, Tokyo 143-8555 (JP); OHUE, Yuji, Ohta-ku, Tokyo 143-8555 (JP); NAKAI, Akiyoshi, Ohta-ku, Tokyo 143-8555 (JP); YAMAGUCHI, Kenta, Ohta-ku, Tokyo 143-8555 (JP); ISOZAKI, Toshihiro, Ohta-ku, Tokyo 143-8555 (JP)
(74) Representative: White, Duncan Rohan

(56) References cited:
- JP-A- H0 278 848
- JP-A- H0 850 692
- JP-A- H05 172 646
- JP-A- 2005 047 390
- JP-A- 2008 241 521
- JP-A- 2011 221 804
- US-A1- 2002 013 656
- US-A1- 2007 126 186
- US-A1- 2009 118 002
- US-A1- 2009 325 606
- US-A1- 2012 306 377
- US-A1- 2014 337 065
- US-B1- 6 691 114

## Description

### BACKGROUND OF THE INVENTION

### 1. Field of the Invention

The following disclosure generally relates to an information processing apparatus, a vacancy information providing program, and a method of providing vacancy information that provide vacancy information of space.

### 2. Description of the Related Art

Conventionally, a technology has been known that provides information about whether there are vacant seats in an eating house such as a coffee shop and a restaurant.

Specifically, for example, a vacant seat management apparatus has been known that is used at an eating house to confirm whether seats of a table to be occupied by customers are vacant or currently used (Patent Document 1). This vacant seat management apparatus indicates vacant seats in the shop to employees at the eating house. The document US2014/0337065 discloses the features of the preamble of claim 1.

[Patent Document 1] Japanese Laid-open Patent Publication No. 2000-194781 discloses a vacancy information system.

However, such a conventional technology cannot provide information, for example, for a person outside of the shop who is looking for an eating house to take a rest or meal around a place where he/she is now, and wants to know whether there is a vacant seat or space that can be occupied by a person in the house. In other words, such a conventional technology cannot provide information that indicates a place currently not occupied by a user in a facility.

In view of the above, it is a general object of at least one embodiment to provide information about places not occupied by a user in a facility where the places are to be available for any user if not occupied.

### SUMMARY OF THE INVENTION

Claims 1, 9 disclose the present invention. Preferred embodiments are disclosed in claims 2-8. According to an embodiment, an information processing apparatus includes a terminal position information obtainment unit configured to obtain positional information of a mobile terminal; a person detection unit configured to obtain person detection data representing existence or non-existence of a user at a place available for users in the facility, wherein the person detection data is information detected by the person detection unit, and wherein the existence or non-existence of a user at the place available for users in the facility is determined based on a temperature detected by at least one temperature detection sensor; a vacancy information generation unit configured to generate the vacancy information, by using image data representing a layout of the facility and the person detection data; a vacancy information search unit configured to refer to a vacancy information storage unit storing vacancy information generated by the vacancy information storage unit for one or more facilities, the stored vacancy information including one or more places not occupied by a user in each of the facilities, the places being available for users if not occupied, so as to obtain the vacancy information of the facilities within a predetermined range including the positional information of the mobile terminal; and a transmitter unit configured to transmit the obtained vacancy information to the mobile terminal.

### BRIEF DESCRIPTION OF DRAWINGS

FIG. 1 is a diagram that illustrates an example of a system configuration of a vacancy information providing system according to a first embodiment;
FIG. 2 is a diagram that illustrates an example of a vacancy information database;
FIG. 3 is a diagram that illustrates an example of layout data;
FIG. 4 is a diagram that illustrates a hardware configuration of a server according to the first embodiment;
FIG. 5 is a diagram that illustrates a functional configuration of a server according to the first embodiment;
FIG. 6 is a diagram that illustrates obtainment of vacancy information by a terminal device according to the first embodiment;
FIG. 7 is a first diagram that illustrates disposition of a thermopile;
FIG. 8 is a second diagram that illustrates disposition of a thermopile;
FIGs. 9A-9C are diagrams that illustrate obtainment of vacancy information;
FIG. 10 is a sequence chart that illustrates operations of a vacancy information providing system according to the first embodiment;
FIG. 11 is a diagram that illustrates an example of a screen on a mobile terminal according to the first embodiment;
FIG. 12 is a diagram that illustrates a functional configuration of a terminal device and a server according to a modified example;
FIG. 13 is a diagram that illustrates an example of a system configuration of a vacancy information providing system according to a second embodiment;
FIG. 14 is a diagram that illustrates a functional configuration of a server according to the second embodiment;
FIG. 15 is a sequence chart that illustrates operations of a vacancy information providing system according to the second embodiment;
FIG. 16 is a diagram that illustrates an example of a screen on a mobile terminal according to the second embodiment;
FIG. 17 is a diagram that illustrates an example of a system configuration of a vacancy information providing system according to a third embodiment;
FIG. 18 is a diagram that illustrates an example of an advertisement information database;
FIG. 19 is a diagram that illustrates a functional configuration of a server according to the third embodiment;
FIG. 20 is a sequence chart that illustrates operations of a vacancy information providing system according to the third embodiment;
FIG. 21 is a diagram that illustrates an example of a screen on a mobile terminal according to the first embodiment;
FIG. 22 is a diagram that illustrates an example of a system configuration of a vacancy information providing system according to a fourth embodiment;
FIG. 23 is a diagram that illustrates an example of a seat information database;
FIG. 24 is a diagram that illustrates a functional configuration of a server according to the fourth embodiment;
FIG. 25 is a sequence chart that illustrates operations of a vacancy information providing system according to the fourth embodiment;
FIG. 26 is a diagram that illustrates an example of a screen on a mobile terminal according to the fourth embodiment;
FIG. 27 is a diagram that illustrates an example of a system configuration of a vacancy information providing system according to a fifth embodiment;
FIG. 28 is a diagram that illustrates an example of a facility position database according to the fifth embodiment;
FIG. 29 is a diagram that illustrates an example of layout data according to the fifth embodiment;
FIG. 30 is a diagram that illustrates a functional configuration of a server according to the fifth embodiment;
FIG. 31 is a diagram that illustrates an example of person detection data;
FIGs. 32A-32C are diagrams that illustrate obtainment of vacancy information by a terminal device according to the fifth embodiment;
FIG. 33 is a sequence chart that illustrates operations of a vacancy information providing system according to the fifth embodiment;
FIG. 34 is a diagram that illustrates an example of a system configuration of a vacancy information providing system according to a sixth embodiment;
FIG. 35 is a diagram that illustrates an example of a reservation database according to the sixth embodiment;
FIG. 36 is a diagram that illustrates a functional configuration of a server according to the sixth embodiment;
FIG. 37 is a sequence chart that illustrates operations of a vacancy information providing system according to the sixth embodiment;
FIG. 38 is a flowchart that illustrates a process of a verification unit according to the sixth embodiment;
FIG. 39 is a first diagram that illustrates an example of a screen on a mobile terminal according to the sixth embodiment;
FIG. 40 is a second diagram that illustrates an example of a screen on a mobile terminal according to the sixth embodiment;
FIG. 41 is a diagram that illustrates a functional configuration of a server according to a seventh embodiment;
FIG. 42 is a sequence chart that illustrates operations of a vacancy information providing system according to the seventh embodiment; and
FIG. 43 is a diagram that illustrates an example of a screen on a mobile terminal according to the seventh embodiment.

### DETAILED DESCRIPTION OF THE PREFERRED EMBODIMENTS

### (First embodiment)

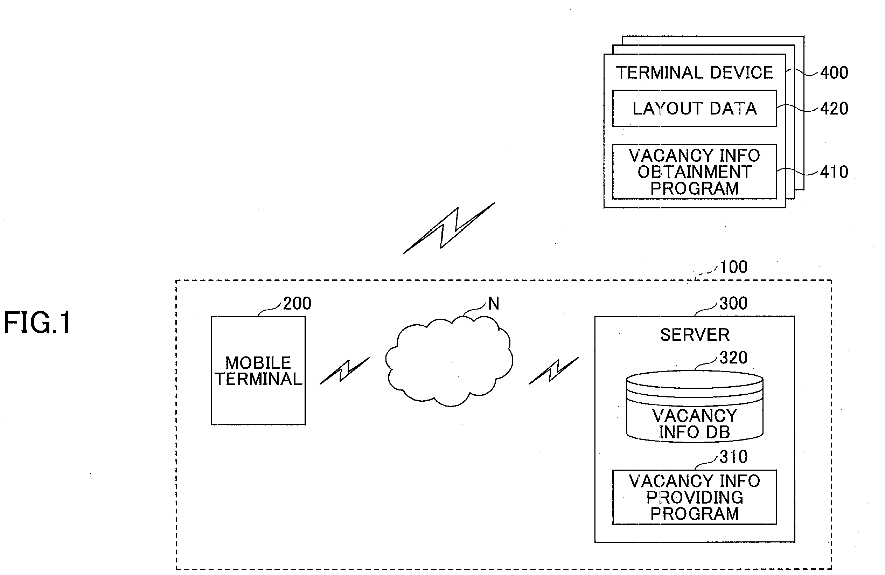

In the following, embodiments will be described with reference to the drawings. FIG. 1 is a diagram that illustrates an example of a system configuration of a vacancy information providing system according to the first embodiment.

The vacancy information providing system 100 in the embodiment includes a mobile terminal 200 and a server 300. The mobile terminal 200 and the server 300 are connected via a network N.

The server 300 in the embodiment has a vacancy information providing program 310 installed, and includes a vacancy information database 320.

Also, the server 300 in the embodiment communicates with a terminal device 400 installed at a shop such as a restaurant via the network N. The terminal device 400 in the embodiment has a vacancy information obtainment program 410 installed, and includes layout data 420 that represents a layout of the shop. The terminal device 400 executes the vacancy information obtainment program 410, to obtain vacancy information of seats in the shop by using the layout data 420. The vacancy information of seats represents vacant seats. The vacancy information obtained by the terminal device 400 is stored in the vacancy information database 320 of the server 300.

The server 300 in the embodiment executes the vacancy information providing program 310 in response to receiving a request for obtaining the vacancy information from the mobile terminal 200, and provides a part of the vacancy information stored in the vacancy information database 320 that corresponds to the position of the mobile terminal 200, to the mobile terminal 200.

In the following description, although the terminal device 400 in the embodiment is assumed to be a terminal installed, for example, in an eating house such as a restaurant, a facility that has the terminal device 400 installed is not limited to an eating house. The facility that has the terminal device 400 installed may be, for example, a library or a community center having a learning room. Further, the facility that has the terminal device 400 in the embodiment installed may be, for example, a place having space that can be occupied by a person, and having equipment by which later-described positional information can be obtained.

Also, in the following description, although the vacancy information is assumed to be information representing whether there are vacant seats in a facility having the terminal device 400 installed, the vacancy information is not limited to that. The vacancy information in the embodiment may be information representing whether there is space that can be occupied by a person. In other words, the vacancy information in the embodiment represents whether there is a place that is not used by a user in a facility. In other words, the vacancy information is information about a place(s) not occupied by a user(s) in a facility(s) where the place(s) is to be available for any user if not occupied.

In the embodiment, space that can be occupied by a person (or a place not occupied by a person) means space that can be occupied by a person for a certain length of time. Specifically, the space that can be occupied by a person may be space that includes, for example, a seat in an eating house, a library, a satellite office, and the like. Also, the space that can be occupied by a person may not have a seat. The space that can be occupied by a person may be space, for example, where the person takes a stand-up meal, or may be space where the person lies down to take a rest.

In the vacancy information providing system 100 in the embodiment, the mobile terminal 200 makes an obtainment request for vacancy information to the server 300 so that vacancy information representing places not occupied by persons in facilities around the mobile terminal 200 is transmitted to the mobile terminal 200. Therefore, according to the embodiment, a user of the mobile terminal 200 can grasp vacant space that is suitable for a specific objective for himself/herself, such as a rest and a meal, around the current position where he/she is now, by a simple operation.

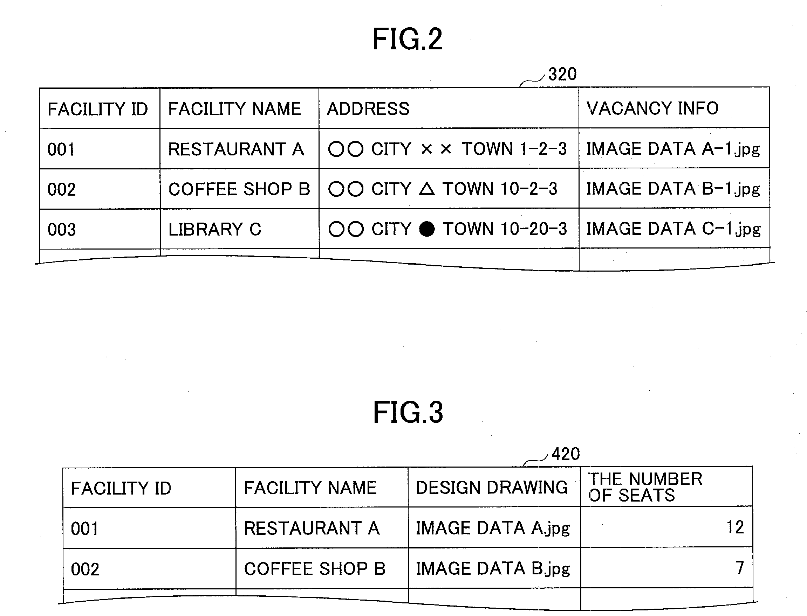

In the following, with reference to FIG. 2, the vacancy information database 320 included in the server 300 will be described. FIG. 2 is a diagram that illustrates an example of the vacancy information database 320 according to the first embodiment.

The vacancy information database 320 in the embodiment includes information items of facility IDs, facility names, addresses, and vacancy information, and these items are associated with each other in records.

The value of the item "facility ID" represents an identifier to identify a facility whose vacancy information is stored in the vacancy information database 320. A facility whose vacancy information is stored in the vacancy information database 320 is a facility that has a terminal device 400 installed. The value of the item "facility name" represents the name of the facility that has the terminal device 400 installed. The value of the item "address" represents the location or address of the facility having the facility name. The value of the item "vacancy information" is image data received from the terminal device 400. The vacancy information will be described in detail later.

FIG. 3 is a diagram that illustrates an example of layout data according to the first embodiment. The layout data 420 in the embodiment is stored in a terminal device 400 at a facility that has the terminal device 400 installed.

The layout data 420 in the embodiment includes information items of facility IDs, facility names, design drawings, and the numbers of seats. The value of the item "FACILITY NAME" represents the name of the facility that has the terminal device 400 installed. The value of the item "DESIGN DRAWING" is image data that represents a layout of the corresponding facility. The value of the item "THE NUMBER OF SEATS" represents the number of seats included in the corresponding facility.

The layout data 420 illustrated in FIG. 3 includes a record in which the value of the item "FACILITY NAME" is "RESTAURANT A"; the value of the item "DESIGN DRAWING" is "IMAGE DATA A.jpg"; and the value of the item "THE NUMBER OF SEATS" is 12. Therefore, one can understand that the number of seats in the restaurant A is 12, and can see the layout of the restaurant A by IMAGE DATA A.jpg, that are stored in the layout data 420 in FIG. 3. Note that image data that represents a layout is, for example, a floor plan in the shop of the restaurant A. The image data that represents a layout may include, for example, information about placement of tables, chairs, and the like in the shop. Also, the number of seats is the number of disposed seats to be occupied by customers. The image data that represents a layout will be described in detail later.

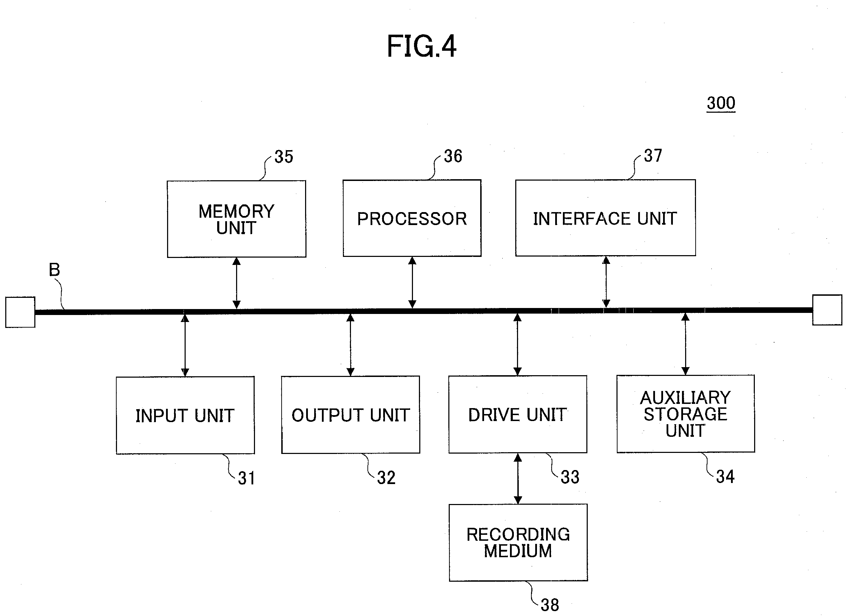

Next, the server 300 in the embodiment will be described. FIG. 4 is a diagram that illustrates a hardware configuration of the server 300 according to the first embodiment.

The server 300 in the embodiment includes an input unit 31, an output unit 32, a drive unit 33, an auxiliary storage unit 34, a memory unit 35, a processor 36, and an interface unit 37, which are mutually connected by a bus B.

The input unit 31 includes a keyboard and a mouse that are used for inputting various signals. The output unit 32 includes a display unit that is used for displaying various windows, data, and the like. The interface unit 37 includes a modem and a LAN card that are used for connecting with a network.

The vacancy information providing program 310 is at least a part of various programs that control the server 300. The vacancy information providing program 310 is provided, for example, by a distributed recording medium 38, or by downloading from a network. As the recording medium 38 that records the vacancy information providing program 310, various types of recording media can be used including recording media that record information optically, electrically or magnetically, such as a CD-ROM, a flexible disk, and an optical magnetic disk, and semiconductor memories that record information electrically such as a ROM and a flash memory.

Also, when a recording medium 38 that records the vacancy information providing program 310 is set in the drive unit 33, the vacancy information providing program 310 is installed in the auxiliary storage unit 34 via the drive unit 33 from the recording medium 38. The vacancy information providing program 310 downloaded from a network is installed in the auxiliary storage unit 34 via the interface device 37.

The auxiliary storage unit 34 stores the installed vacancy information providing program 310, and also stores required files, data, and the like. The memory unit 35 reads and stores the vacancy information providing program 310 from the auxiliary storage unit 34 when the server 300 is activated. The processor 36 implements various processes, which will be described later, following the vacancy information providing program 310 stored in the memory unit 35.

Note that the hardware configuration of the terminal device 400 in the embodiment is virtually the same as that of the server 300, and the description is omitted. The mobile terminal 200 in the embodiment may be, for example, a cellular phone such as a smart phone, or may be a tablet-type computer. In such a case, the mobile terminal 200 may have, as an input unit, a display-and-operation device that has display functions.

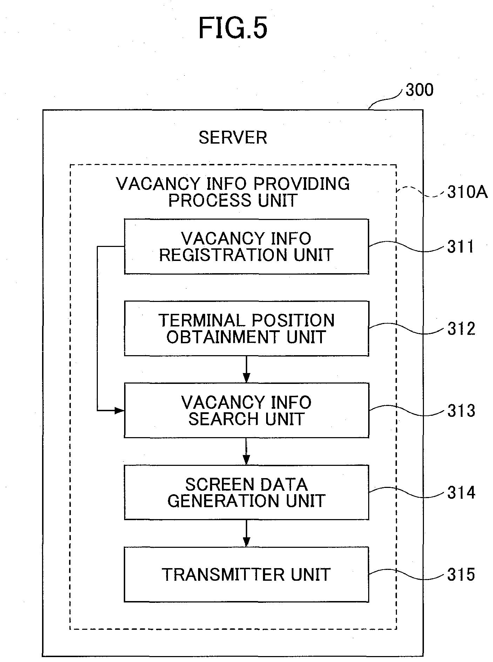

FIG. 5 is a diagram that illustrates a functional configuration of the server 300 according to the first embodiment. The server 300 in the embodiment includes a vacancy information providing process unit 310A. The vacancy information providing process unit 310A in the embodiment is implemented by the processor 36 of the server 300 executing the vacancy information providing program 310.

The vacancy information providing process unit 310A in the embodiment includes a vacancy information registration unit 311, a terminal position obtainment unit 312, a vacancy information search unit 313, a screen data generation unit 314, and a transmitter unit 315.

The vacancy information registration unit 311 obtains the vacancy information from the terminal devices 400, along with the facility names, and the addresses of facilities that have the terminal devices 400 installed, and registers these in the vacancy information database 320.

The terminal position obtainment unit 312 obtains the positional information of the mobile terminal 200 transmitted from the mobile terminal 200. The positional information of the mobile terminal 200 is obtained by GPS (Global Positioning System) functions of the mobile terminal 200. The positional information in the embodiment represents, for example, the latitude and the longitude.

The vacancy information search unit 313 searches the vacancy information database 320 by the obtained positional information of the mobile terminal 200, so as to obtain vacancy information. The screen data generation unit 314 generates screen data to display the obtained vacancy information on the mobile terminal 200. The transmitter unit 315 transmits data from the server 300 to the mobile terminal 200.

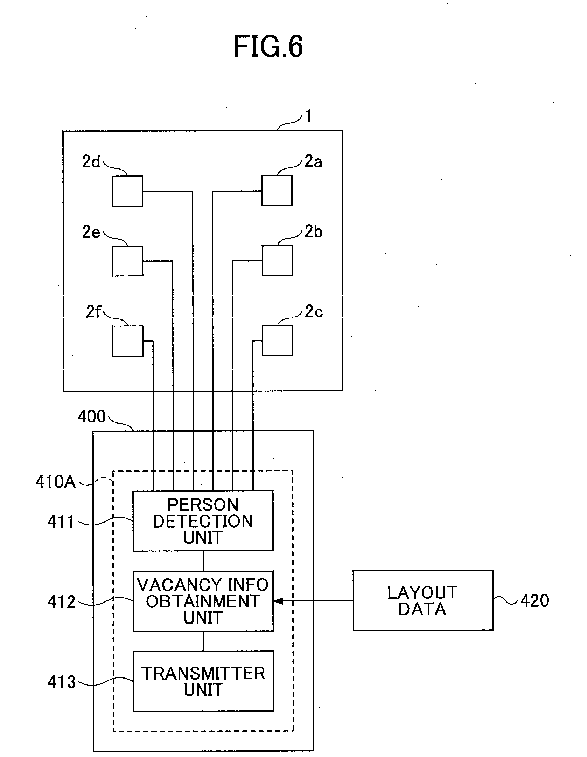

FIG. 6 is a diagram that illustrates obtainment of vacancy information by the terminal device 400 according to the first embodiment. The terminal device 400 in the embodiment includes a vacancy information obtainment process unit 410A.

The vacancy information obtainment process unit 410A is implemented by a processor of the terminal device 400 that executes the vacancy information obtainment program 410.

The vacancy information obtainment process unit 410A includes a person detection unit 411, a vacancy information obtainment unit 412, and a transmitter unit 413.

The person detection unit 411 detects temperature distribution of space in the facility to be observed, by temperatures detected by temperature detection sensors (thermopiles) 2a to 2f, which will be described later, and detects an area(s) in the room where a person exists. In the following description, information detected by the person detection unit 411 that represents whether a person exists in the space will be referred to as "person detection data".

The vacancy information obtainment unit 412 obtains vacancy information based on the layout data 420 and an area where a person exists. The transmitter unit 413 transmits the obtained vacancy information to the server 300, along with the facility name and address of the facility.

In the following, obtainment of the vacancy information by the terminal device 400 will be described.

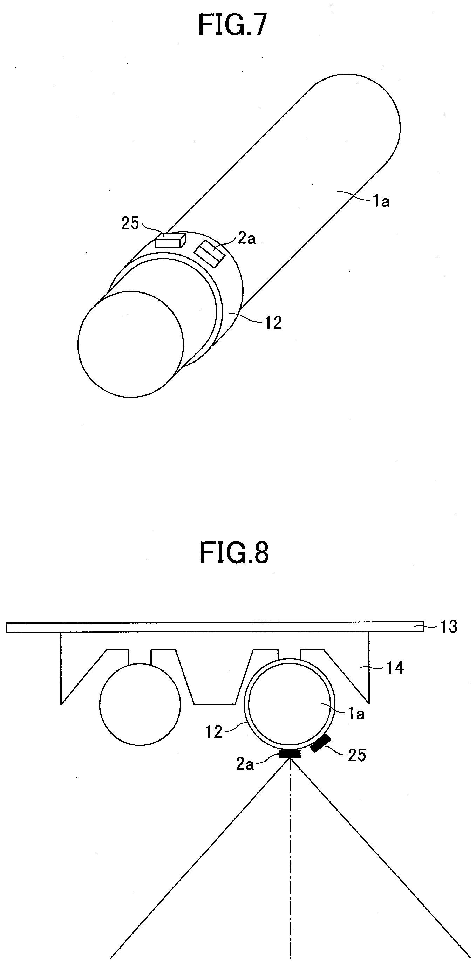

In FIG. 6, a frame 1 represents space (a floor) in a facility viewed in a direction from the ceiling to the floor. Codes 2a to 2f represent thermopiles to detect the temperature distribution in the space. Disposition of the thermopiles will be described with reference to FIG. 7 and FIG. 8.

FIG. 7 is a first diagram that illustrates disposition of a thermopile; and FIG. 8 is a second diagram that illustrates disposition of a thermopile. In FIG. 7, code 1a represents a fluorescent tube that is attached to a fluorescence light attachment disposed on the ceiling of the space as an illumination device in the space. Code 2a represents the thermopile that corresponds to 2a in FIG. 6. The thermopile 2a is attached to the fluorescent tube 1a by a ring 12.

FIG. 8 illustrates the fluorescent tube 1a attached to the fluorescence light attachment 14 fixed on the ceiling 13. By attaching the fluorescent tube 1a to the fluorescence light attachment 14, the thermopile 2a can be disposed at the same time. Note that a fluorescent tube is taken as an example in FIG. 8, but the illumination is not limited to that. Any other illumination device may be used, such as an LED illumination. Data detected by the thermopile 2a can be transferred to another device, such as a server 300, via a driver and a wireless module (not illustrated). Transmission of data detected by the thermopile 2a to the server 300 will be described in a modified example later.

The thermopile 2a in the embodiment is an element that has infrared ray sensors arrayed in 2D, and captures an image that is focused by an optical system (not illustrated), to detect 2D space temperature distribution in a predetermined range. If a person exists in the space, the person having the body temperature is detected as a heat source that emits an amount of infrared rays different from those of surrounding objects, and thereby the existence of the person in the space and the position can be detected.

Therefore, in the example in FIG. 6, the entire temperature distribution in the space 1 is obtained from the temperature distribution detected by the thermopiles 2a to 2f, with which it is possible to detect whether a person(s) exists in the space 1.

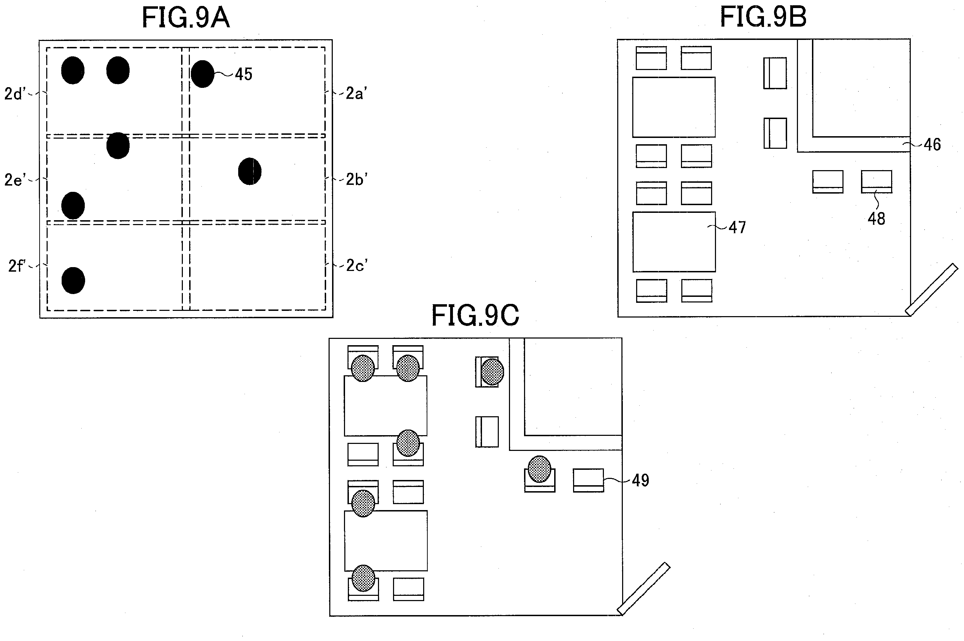

In the following, obtainment of vacancy information will be described with reference to FIGs. 9A-9C. FIGs. 9A-9C are diagrams that illustrate obtainment of vacancy information. FIG. 9A is a diagram that illustrates existence and non-existence of persons in the restaurant A detected by the person detection unit 411 of the terminal device 400 set in the restaurant A having the facility ID of "001". In other words, the information illustrated in FIG. 9A is the person detection data in the restaurant A. Dashed-line squares 2a' to 2f' in FIG. 9A represent areas whose temperature distributions are detected by the thermopiles 2a to 2f disposed in the room of the restaurant A, respectively, and black circles such as a circle 45 represent persons as heat sources, respectively.

The terminal device 400 in the embodiment has the vacancy information obtainment unit 412 obtain the vacancy information, by using the layout data 420 stored in the memory, and the person detection data.

FIG. 9B is an example of a displayed image of IMAGE DATA A.jpg that represents the layout of the restaurant A (see FIG. 3), in which objects having codes 46, 47, and 48 schematically denote a counter, a table, and a chair, respectively, installed in the restaurant A. FIG. 9C is an example of a displayed image of IMAGE DATA A-1.jpg that shows the vacancy information of the restaurant A. In other words, the image illustrated in FIG. 9C is the vacancy information of the restaurant A.

In the embodiment, the vacancy information illustrated in FIG. 9C is obtained by superimposing the person detection data illustrated in FIG. 9A, with the displayed image of IMAGE DATA A.jpg illustrated in FIG. 9B. Note that positional correspondence between the person detection data and the displayed image of IMAGE DATA A.jpg is set in advance.

In FIG. 9C, gray circles represent persons at corresponding positions at which existence of persons has been determined by the person detection unit 411 as denoted by the black circles in FIG. 9A, which are replaced with the gray circles.

In other words, the vacancy information in the embodiment is the image data of an image that is obtained by superimposing the image data that represents the layout of the facility with an image that represents positions where users actually exist.

Therefore, in the vacancy information in the embodiment, a place at which the denotation representing the existence of a user is not displayed is a place not occupied by a person, namely, space that can be occupied by a person. In the example in FIG. 9C, it can be seen that a seat having the code 49 is a vacant seat.

The terminal device 400 in the embodiment executes the process of the vacancy information obtainment unit 412 described above every predetermined time, and transmits the obtained vacancy information to the server 300 every time. Therefore, the vacancy information database 320 in the embodiment is updated every predetermined time.

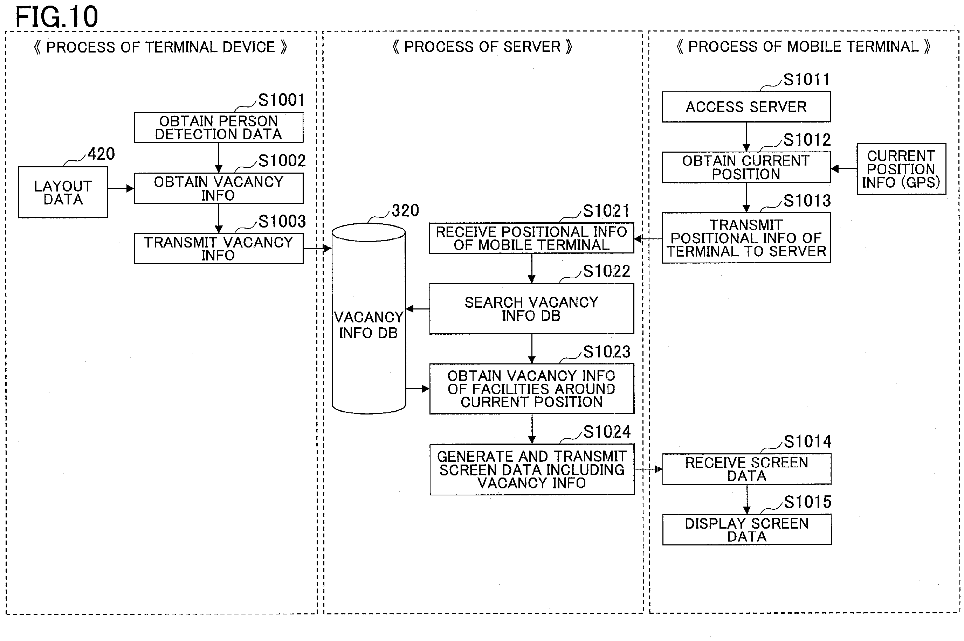

Next, with reference to FIG. 10, operations of the vacancy information providing system 100 in the embodiment will be described. FIG. 10 is a sequence chart that illustrates the operations of the vacancy information providing system 100 according to the first embodiment.

First, operations of the terminal device 400 will be described. The terminal device 400 in the embodiment has the person detection unit 411 obtain person detection data detected in a facility that has the terminal device 400 installed (Step S1001).

Next, the terminal device 400 refers to the person detection data and the layout data 420, to obtain the vacancy information (Step S1002). The obtainment of the vacancy information is done as described with FIGs. 9A-9C. Next, the terminal device 400 has the transmitter unit 413 transmit the obtained vacancy information, and the facility name and address of the facility that has the terminal device 400 installed to the server 300 (Step S1003). Note that the facility name and address of the facility may be stored in advance in the memory of the terminal device 400 along with the layout data 420.

Steps S1001 to S1003 are executed by the terminal device 400 every predetermined time. The vacancy information, the facility name and the address transmitted from the terminal device 400 are stored in the vacancy information database 320 by the vacancy information registration unit 311 of the server 300.

Next, operations of the mobile terminal 200 in the embodiment will be described.

In response to receiving an operation of a request for obtaining the vacancy information by the user of the mobile terminal 200, the mobile terminal 200 accesses the server 300 (Step S1011). Next, the mobile terminal 200 obtains positional information that represents the current position of the mobile terminal 200 by the GPS functions of the mobile terminal 200 (Step S1012). Next, the mobile terminal 200 transmits the obtained positional information of the mobile terminal 200 to the server 300 (Step S1013).

In response to receiving screen data that includes the vacancy information from the server 300 (Step S1014), the mobile terminal 200 displays the received screen data (Step S1015).

Next, operations of the server 300 in the embodiment will be described.

The server 300 in the embodiment has the terminal position obtainment unit 312 receive the request for obtaining the vacancy information, and the positional information of the mobile terminal 200 from the mobile terminal 200 (Step S1021). Next, the server 300 has the vacancy information search unit 313 search the vacancy information database 320 by the positional information of the mobile terminal 200 (Step S1022).

Next, the server 300 has the vacancy information search unit 313 obtain the vacancy information of the facility around the address designated by the positional information of the mobile terminal 200 (Step S1023). Specifically, the vacancy information search unit 313 extracts facilities having the vacancy information registered, for example, within a circle having the center at the position of the mobile terminal 200 and a predetermined radius, in general map information. Then, the vacancy information search unit 313 may obtain the vacancy information that corresponds to the extracted facilities from the vacancy information database 320. Also, the vacancy information search unit 313 may obtain the vacancy information of the facilities, for example, that are in a town or on a street that includes the position of the mobile terminal 200.

Next, the server 300 has the screen data generation unit 314 generate screen data that includes the obtained vacancy information, and has the transmitter unit 315 transmit the generated screen data to the mobile terminal 200 (Step S1024).

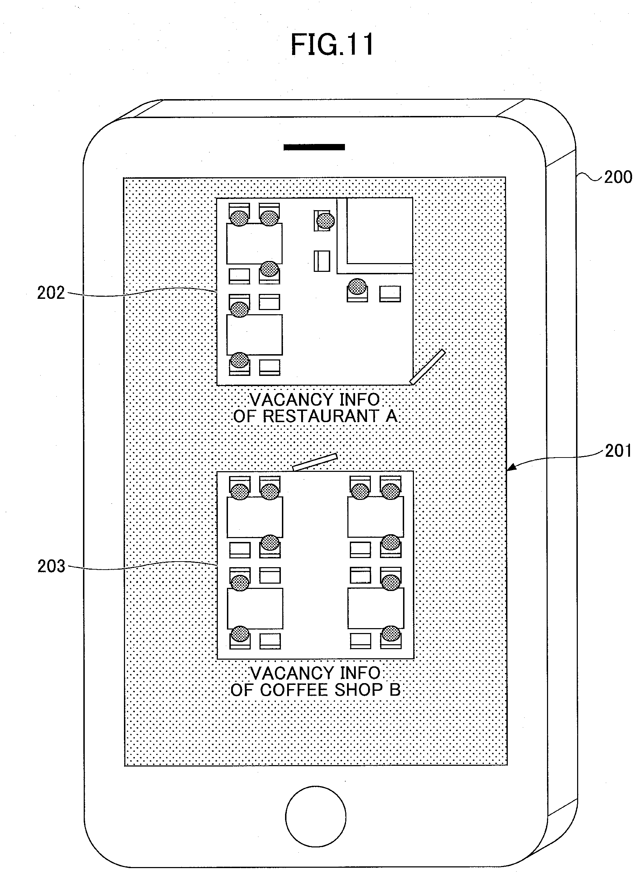

In the following, with reference to FIG. 11, the vacancy information displayed on the mobile terminal 200 will be described. FIG. 11 is a diagram that illustrates an example of a screen on the mobile terminal 200 according to the first embodiment.

A screen 201 illustrated in FIG. 11 displays the vacancy information 202 of the restaurant A and the vacancy information 203 of the coffee shop B. In FIG. 11, similar to FIG. 9C, persons are replaced and denoted by symbols of gray circles in the temperature distribution output. Therefore, according to the vacancy information 202, in the restaurant A, there are five vacant seats, no vacant table, and two vacant counter seats. Also, according to the vacancy information 203, in the coffee shop B, there are six vacant seats, and no vacant table.

Note that FIG. 11 illustrates an example in which the vacancy information of the two facilities is displayed on the screen 201, but the number of facilities whose vacancy information is displayed on the screen 201 is not limited. For example, if multiple vacancy information items are obtained by the vacancy information search unit 313, the server 300 may generate screen data that shows a list of facility names, in increasing order by the distance from the mobile terminal 200, and transmits the generated data to the mobile terminal 200. In this case, the server 300 may receive selection of a facility in the list of the facility names on the mobile terminal 200, generates screen data that includes the vacancy information of the selected facility, and transmits the generated data to the mobile terminal 200.

As above, according to the embodiment, it is possible to provide information that represents vacant states of dedicated space to be occupied by persons, by a simple operation.

Note that in the embodiment, although it is assumed that the terminal device 400 obtains vacancy information, and transmits it to the server 300, the obtainment is not limited to that. The terminal device 400 may transmit, for example, the person detection data to the server 300 along with the layout data 420. In this case, the server 300 may generate vacancy information of facilities from the layout data 420 and the person detection data.

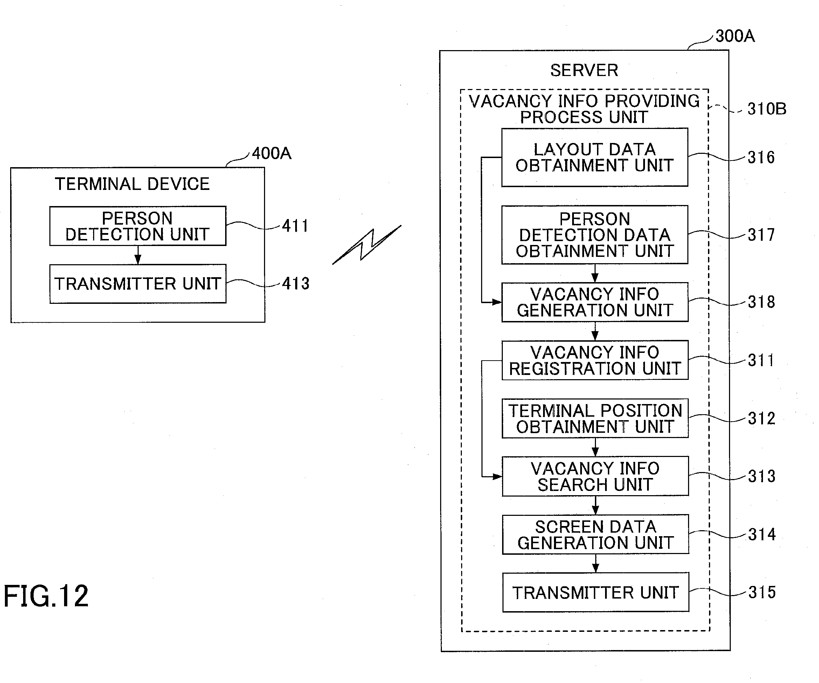

In the following, a modified example of the embodiment will be described, in which the server 300 generates vacancy information. FIG. 12 is a diagram that illustrates a functional configuration of a terminal device 400A and a server 300A according to the modified example.

The terminal device 400A in FIG. 12 includes a person detection unit 411 and a transmitter unit 413.

The terminal device 400A in the embodiment has the person detection unit 411 obtain person detection data, and has the transmitter unit 413 transmit the person detection data to the server 300A.

The server 300A in FIG. 12 includes a vacancy information providing process unit 310B. The vacancy information providing process unit 310B includes, in addition to the units included in the vacancy information providing process unit 310A, a layout data obtainment unit 316, a person detection data obtainment unit 317, and a vacancy information generation unit 318.

The layout data obtainment unit 316 obtains layout data 420 from the terminal device 400A. The person detection data obtainment unit 317 obtains person detection data from the terminal device 400A every predetermined time. The vacancy information generation unit 318 generates vacancy information by using the layout data 420 and the person detection data. The vacancy information registration unit 311 stores the generated vacancy information in the vacancy information database 320.

As described by the modified example, the server 300A may generate the vacancy information according to the embodiment. If the server 300A generates the vacancy information, the server 300A may refer to layout data 420 in a facility, and person detection data that represents existence and non-existence of persons and the positions of the persons in the facility.

### (Second embodiment)

In the following, a second embodiment will be described with reference to the drawings. The second embodiment provides map information that shows routes to facilities, in addition to the vacancy information, which is different from the first embodiment. Therefore, in the following description of the second embodiment, only different points from the first embodiment will be described, the same codes are assigned to elements that have substantially the same functions as in the first embodiment, and their description is omitted.

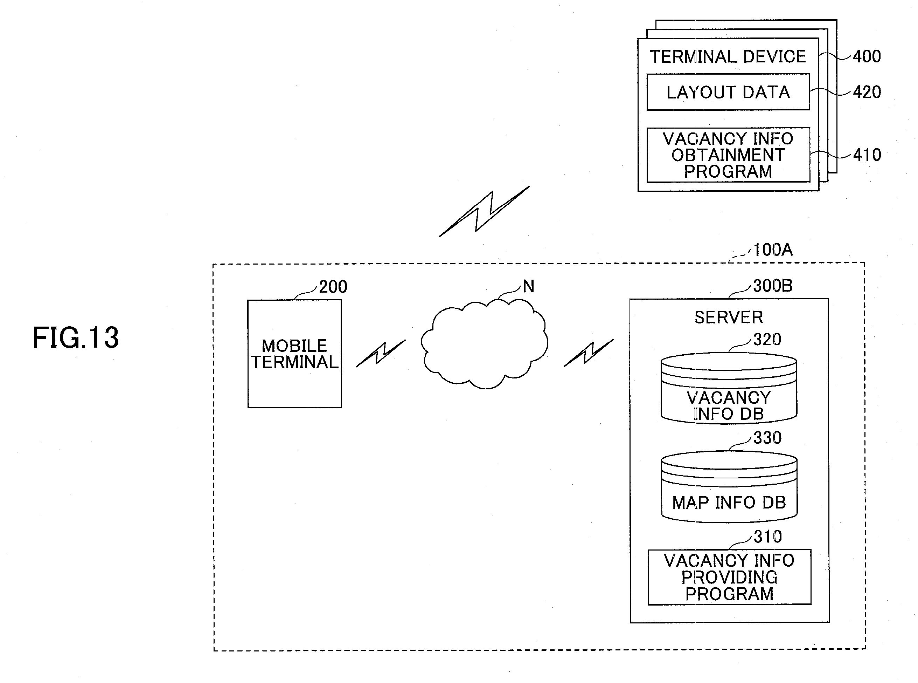

FIG. 13 is a diagram that illustrates an example of a system configuration of a vacancy information providing system 100A according to the second embodiment.

In the vacancy information providing system 100A in the embodiment, the server 300B includes a map information database 330.

The map information database 330 in the embodiment is map information that is used in, for example, a general navigation system.

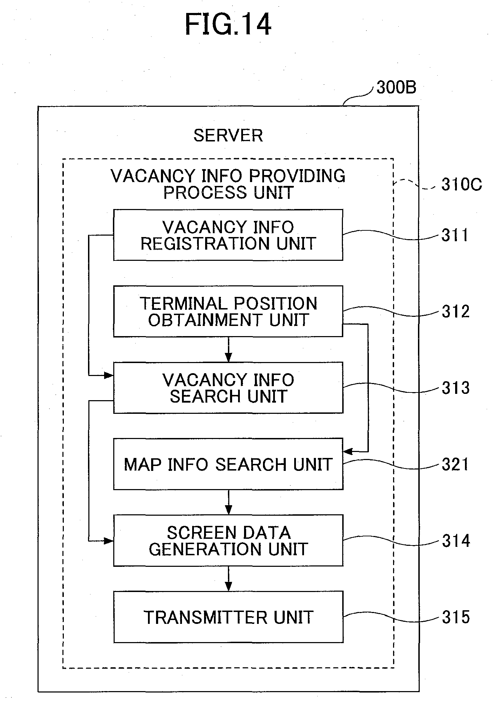

FIG. 14 is a diagram that illustrates a functional configuration of the server 300B according to the second embodiment. The server 300B in the embodiment includes a vacancy information providing process unit 310C. The vacancy information providing process unit 310C in the embodiment includes a map information search unit 321, in addition to the units included in the vacancy information providing process unit 310A of the first embodiment.

The map information search unit 321 in the embodiment searches the map information database 330 by positional information that represents the position of the mobile terminal 200.

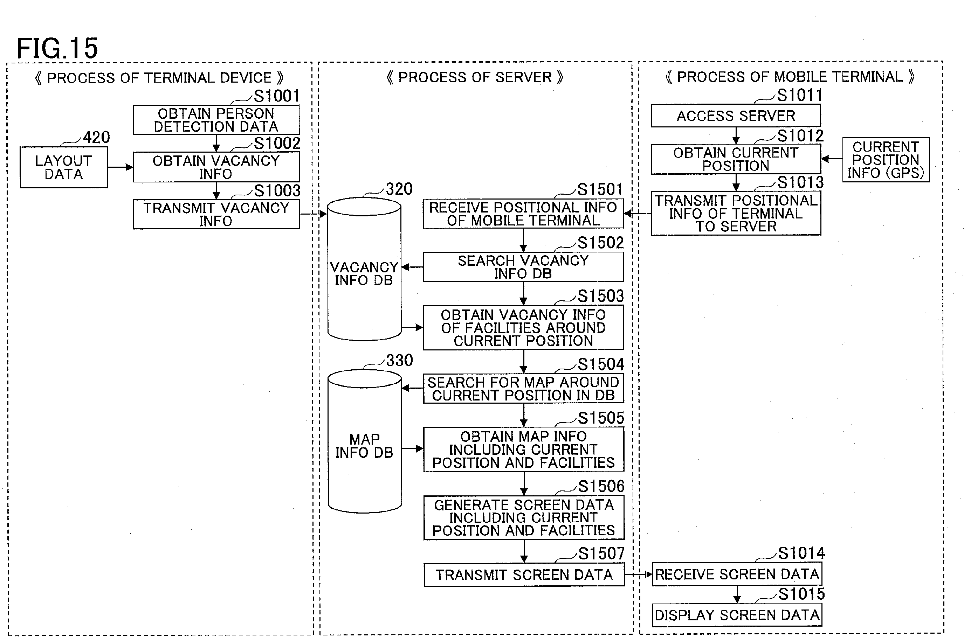

In the following, with reference to FIG. 15, operations of the vacancy information providing system 100A in the embodiment will be described. FIG. 15 is a sequence chart that illustrates operations of the vacancy information providing system 100A according to the second embodiment.

In FIG. 15, steps that have the same numbers assigned as in FIG. 10 are executed in substantially the same way as in FIG. 10, and their description is omitted.

Also, Steps S1501 to S1503 in FIG. 15 are substantially the same as Steps S1021 to S1023 in FIG. 10, and their description is omitted.

After Step S1503, the server 300B has the map information search unit 321 search the map information database 330 by the positional information obtained from the mobile terminal 200 (Step S1504). Then, the server 300B obtains map information that includes the current position of the mobile terminal 200 and the addresses of facilities whose vacancy information has been obtained at Step S1503 (Step S1505).

Next, the server 300B has the screen data generation unit 314 generate screen data that includes the vacancy information obtained at Step S1503 and the map information obtained at Step S1505 (Step S1506). Then, the server 300B has the transmitter unit 315 transmit the screen data to the mobile terminal 200 (Step S1507).

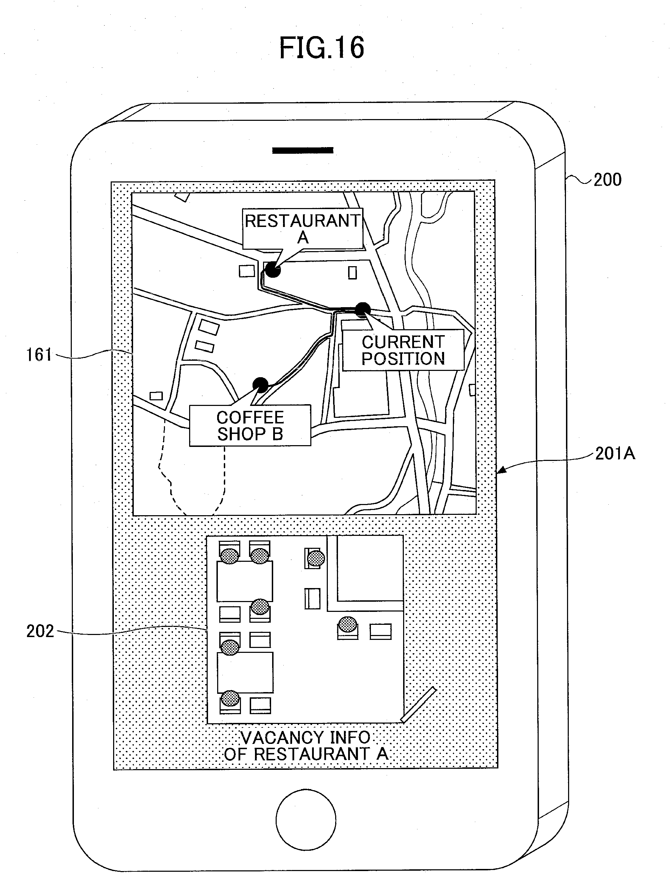

FIG. 16 is a diagram that illustrates an example of a screen on the mobile terminal 200 according to the second embodiment. A screen 201A illustrated in FIG. 16 displays the vacancy information 202 of the restaurant A, and map information 161 that includes the current place of the mobile terminal 200, the restaurant A, and the coffee shop B.

In the map information 161, respective routes to the restaurant A and the coffee shop B from the current place of the mobile terminal 200 are displayed.

In this way, according to the embodiment, not only the vacancy information, but also the routes to the facilities whose vacancy information has been obtained, are displayed. Therefore, according to the embodiment, for example, even if the user of the mobile terminal 200 does not have acquaintance with the place around the current place of the mobile terminal 200, he/she can be easily guided to the facilities whose vacancy information has been provided.

Note that in the example in FIG. 16, the map information 161 and the vacancy information 202 are displayed on the same screen, but the server 300B in the embodiment may have the mobile terminal 200 display only the map information 161 at first. In other words, the server 300B may have the mobile terminal 200 display at first map information that includes all facilities whose vacancy information has been obtained.

Then, the server 300B may receive selection of a facility on the map information displayed on the mobile terminal 200, and then, displays the map information and the vacancy information of the selected facility on the same screen.

### (Third embodiment)

In the following, a third embodiment will be described with reference to the drawings. The third embodiment provides advertisement information in addition to the vacancy information, which is different from the first embodiment. Therefore, in the following description of the third embodiment, only different points from the first embodiment will be described, the same codes are assigned to elements that have substantially the same functions as in the first embodiment, and their description is omitted.

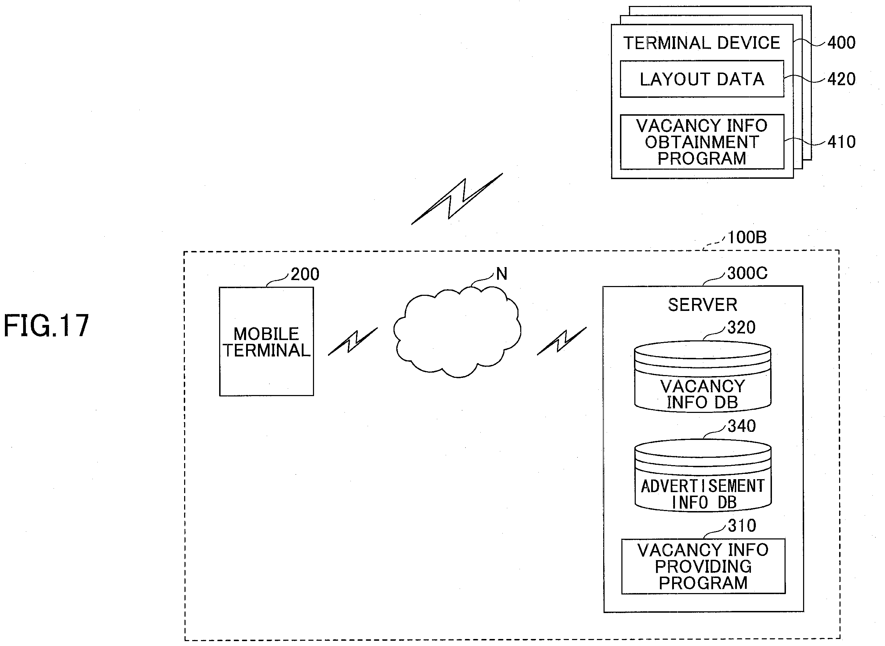

FIG. 17 is a diagram that illustrates an example of a system configuration of a vacancy information providing system 100B according to the third embodiment.

In the vacancy information providing system 100B in the embodiment, the server 300C includes an advertisement information database 340.

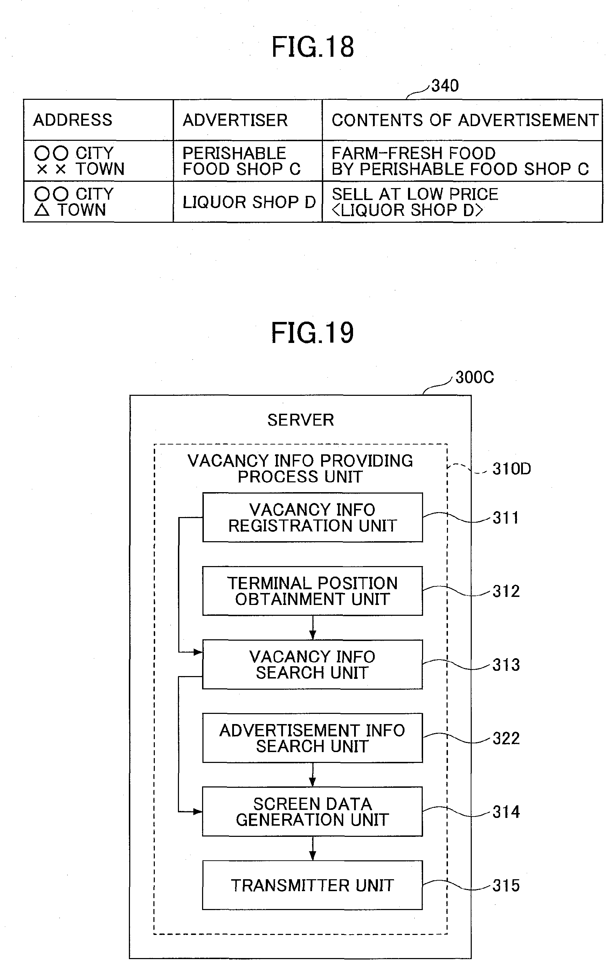

FIG. 18 is a diagram that illustrates an example of the advertisement information database 340. The advertisement information database 340 in the embodiment includes information items of addresses, advertisers, and contents of advertisement. The value of an item of "ADDRESS" is a street number and/or a town name to determine a predetermined range where advertisement is provided. The value of the item "ADVERTISER" represents an advertiser who advertises corresponding contents of advertisement. The value of the item "CONTENTS OF ADVERTISEMENT" represents the contents of the advertisement that is provided with the vacancy information. In the following description, the value of the item "CONTENTS OF ADVERTISEMENT" will be referred to as "advertisement information".

In the embodiment, an advertiser who desires to provide an advertisement may access the advertisement information database 340, to register the street number and/or the town name to determine the predetermined range where the advertisement is to be provided, the name of the advertiser, and the advertisement information.

FIG. 19 is a diagram that illustrates a functional configuration of the server 300C according to the third embodiment. The server 300C in the embodiment includes a vacancy information providing process unit 310D. The vacancy information providing process unit 310D in the embodiment includes an advertisement information search unit 322 in addition to the units included in the vacancy information providing process unit 310A of the first embodiment.

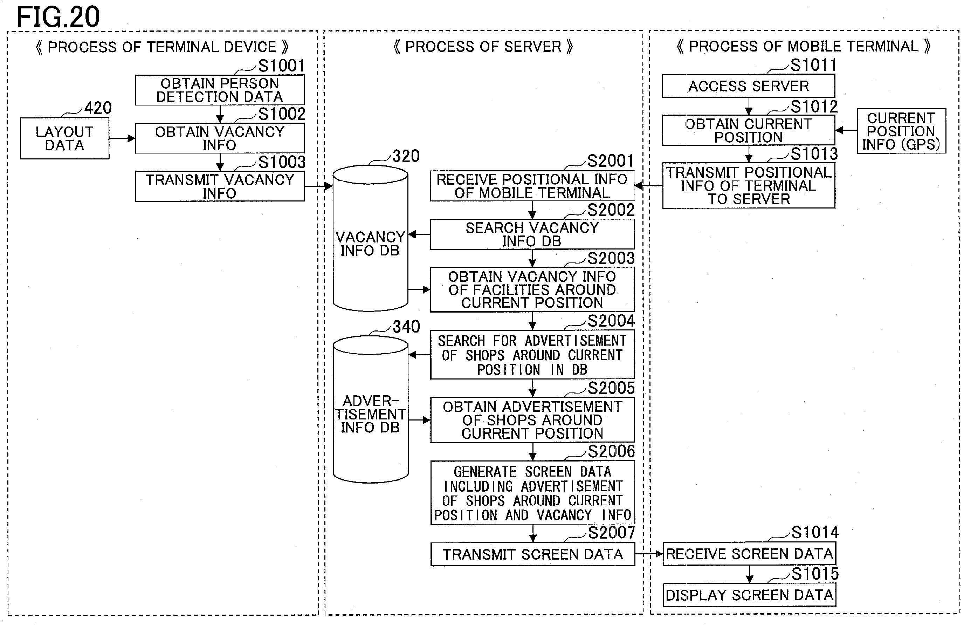

In the following, with reference to FIG. 20, operations of the vacancy information providing system 100B in the embodiment will be described. FIG. 20 is a sequence chart that illustrates operations of the vacancy information providing system 100B according to the third embodiment.

In FIG. 20, steps that have the same numbers assigned as in FIG. 10 are executed in substantially the same way as in FIG. 10, and their description is omitted.

Also, Steps S2001 to S2003 in FIG. 20 are substantially the same as Steps S1021 to S1023 in FIG. 10, and their description is omitted.

After Step S2003, the server 300C has the advertisement information search unit 322 search the advertisement information database 340 by the positional information obtained from the mobile terminal 200 (Step S2004). Then, the server 300C obtains advertisement information in the advertisement information database 340 that includes the current position of the mobile terminal 200 as the value of the item "ADDRESS" (Step S2005).

Next, the server 300C has the screen data generation unit 314 generate screen data that includes the vacancy information obtained at Step S2003 by the screen data generation unit 314, and the advertisement information obtained at Step S2005 (Step S2006). Then, the server 300C has the transmitter unit 315 transmit the screen data to the mobile terminal 200 (Step S2007).

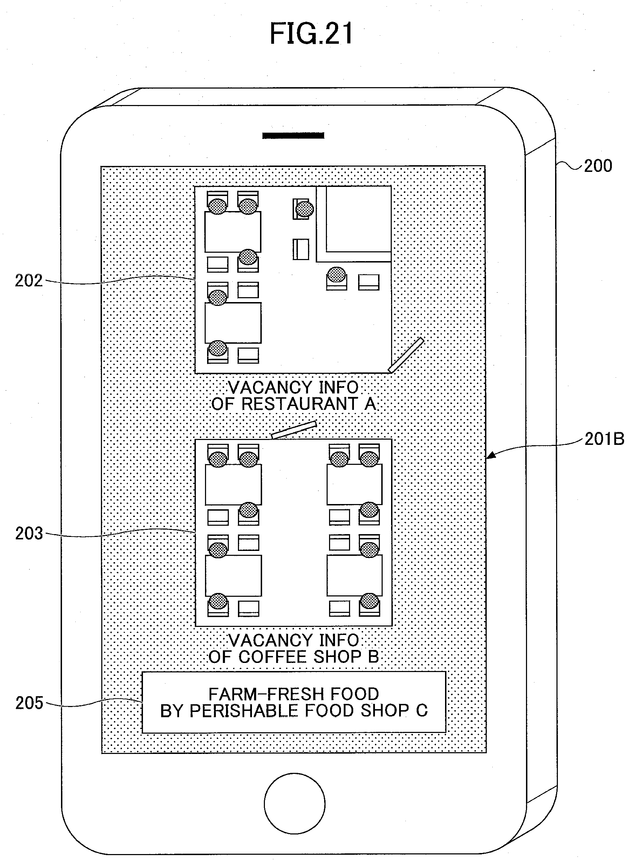

FIG. 21 is a diagram that illustrates an example of a screen on the mobile terminal 200 according to the third embodiment. A screen 201B illustrated in FIG. 21 displays the vacancy information 202 of the restaurant A, the vacancy information 203 of the coffee shop B, and the advertisement information 205.

In the example in FIG. 21, the current place of the mobile terminal 200 is, for example, at XX town 1-2-3 in OO city. In this case, in the advertisement information database 340, advertisement information whose value of the item "ADDRESS" is set to the town name that includes the current place of the mobile terminal 200, is "FARM-FRESH FOOD BY PERISHABLE FOOD SHOP C". Therefore, the advertisement information search unit 322 obtains the advertisement information "FARM-FRESH FOOD BY PERISHABLE FOOD SHOP C", and displays it on the screen 201B.

As above, according to the embodiment, when the user of the mobile terminal 200 attempts to grasp vacancy information of restaurants and the like around the current place, the advertisement information in the neighborhood of the current place of the mobile terminal 200 can be shown so as to be seen by the user naturally, and hence the advertiser can enjoy effects of the advertisement.

Note that in the embodiment, the vacancy information and the advertisement information are displayed together, but it not limited to that.

In the embodiment, instead of the advertisement information, information about facilities relating to the facility whose vacancy information has been displayed may be displayed. Specifically, for example, while the vacancy information of the restaurant A is displayed, information about an affiliated shop of the restaurant A may be displayed instead of the advertisement information of the restaurant A. Further, in the embodiment, for example, if the number of the vacant seats is fewer than a predetermined set value, or there is no vacant seat in the vacancy information of the restaurant A, instead of the advertisement information, an affiliated shop of the restaurant A around the current place of the mobile terminal 200 and having vacant seats, may be displayed.

### (Fourth embodiment)

In the following, a fourth embodiment will be described with reference to the drawings. The fourth embodiment provides seat information set for each seat in addition to the vacancy information, which is different from the first embodiment. Therefore, in the following description of the fourth embodiment, only different points from the first embodiment will be described, the same codes are assigned to elements that have substantially the same functions as in the first embodiment, and their description is omitted.

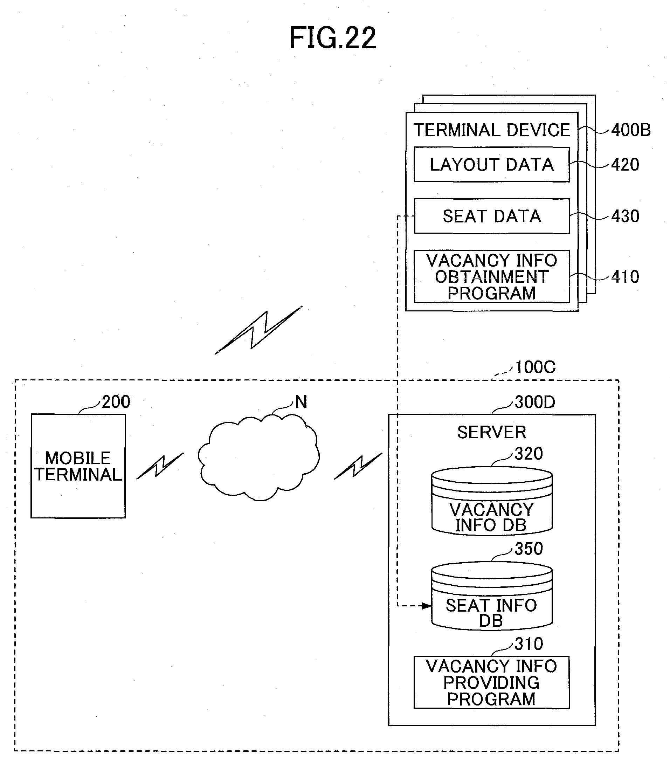

FIG. 22 is a diagram that illustrates an example of a system configuration of a vacancy information providing system 100C according to the fourth embodiment.

In the vacancy information providing system 100C in the embodiment, the server 300D includes a seat information database 350 and the terminal device 400B includes seat data 430. The terminal device 400B in the embodiment has the seat data 430 registered and stored in advance, for example, by an administrator of a facility having the terminal device 400B installed. The seat data 430 is transmitted to the server 300D, and stored in the seat information database 350.

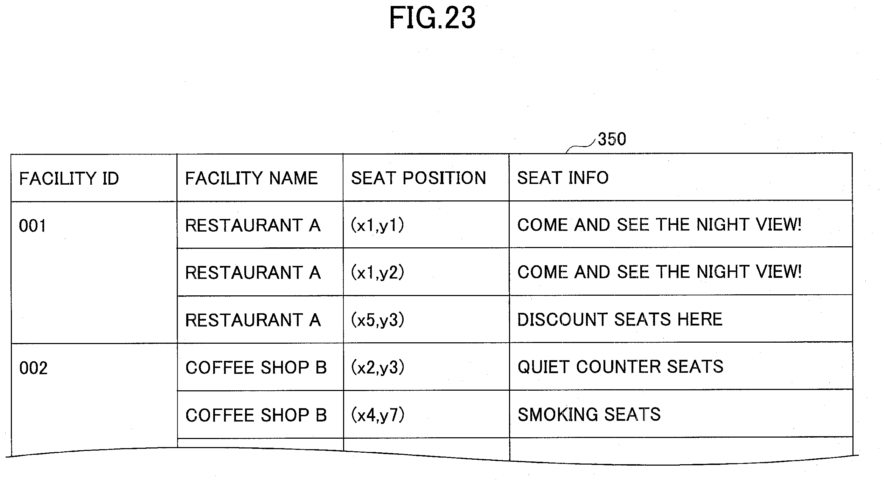

FIG. 23 is a diagram that illustrates an example of the seat information database 350. The seat information database 350 in the embodiment includes information items of facility IDs, facility names, seat positions, and display information, the item "SEAT POSITION" is associated with the other items in a record. In the following description, a record of information that includes the value of the item "SEAT POSITION" and the values of the other items will be referred to as "seat information". The seat information database 350 in the embodiment is a collection of seat information transmitted from terminal devices 400B installed in the facilities.

The value of the item "FACILITY NAME" is the name of the facility where the terminal device 400B that has transmitted seat data, which will be described later, to the server 300D is installed. The value of the item "SEAT POSITION" is coordinates that represent the position of the seat in the layout data 420. The coordinates of the position of a seat in the embodiment may be, for example, coordinates of the center point of an area occupied by the seat in image data included in the layout data 420.

The value of the item "SEAT INFORMATION" is information set for the seat of the corresponding position of the seat. The seat information in the embodiment may be, for example, information that represents a characteristic of the seat, or may be information about a service available at the seat. In the embodiment, the seat information can be registered in the terminal device 400B discretionally.

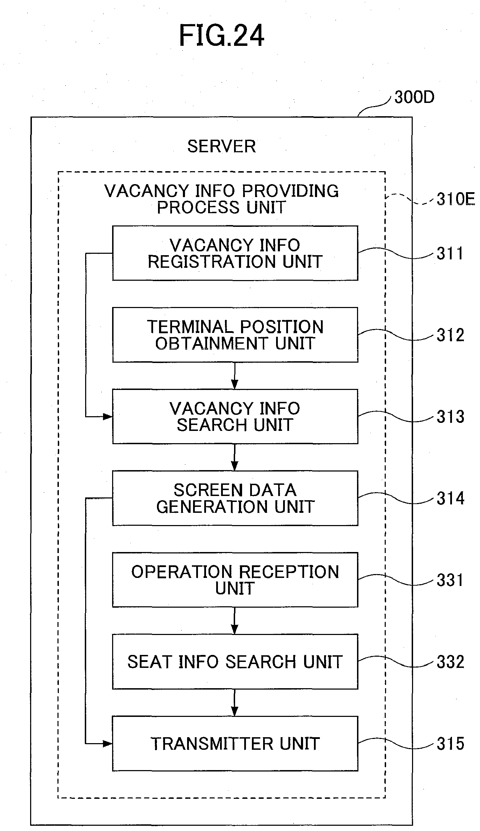

FIG. 24 is a diagram that illustrates a functional configuration of a server 300D according to the fourth embodiment. The server 300D in the embodiment includes a vacancy information providing process unit 310E. The vacancy information providing process unit 310E in the embodiment includes an operation reception unit 331 and a seat information search unit 332 in addition to the units included in the vacancy information providing process unit 310A of the first embodiment.

The operation reception unit 331 receives as input that an operation to select a seat has been performed on the vacancy information displayed on the mobile terminal 200. The seat information search unit 332 searches the seat information database 350 by the position of the selected seat, to obtain the seat information that corresponds to the selected seat.

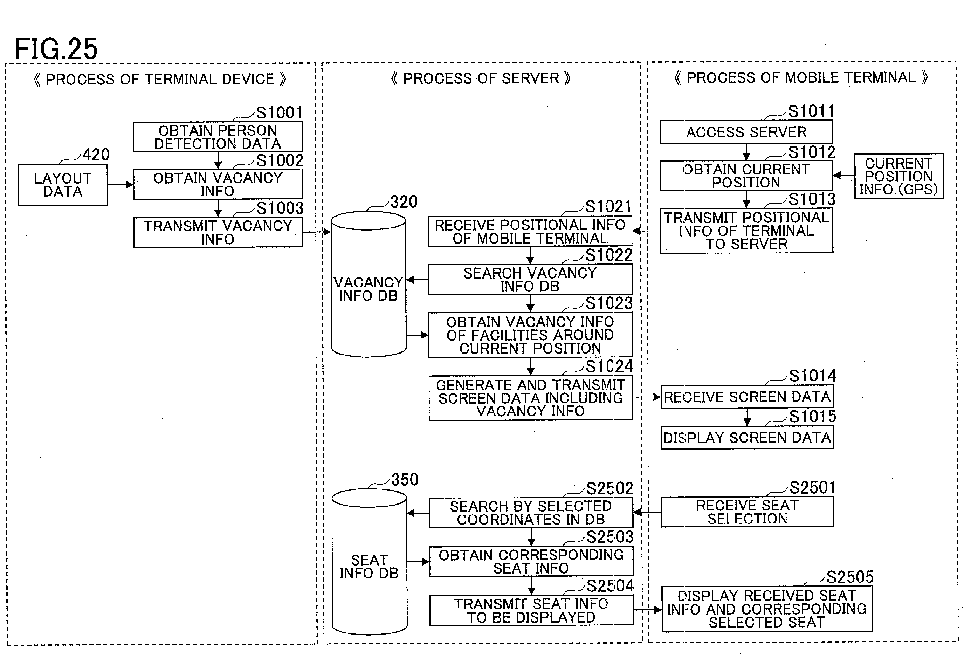

Next, with reference to FIG. 25, operations of the vacancy information providing system 100C in the embodiment will be described. FIG. 25 is a sequence chart that illustrates operations of the vacancy information providing system 100C according to the fourth embodiment.

In FIG. 25, steps that have the same numbers assigned as in FIG. 10 are executed in substantially the same way as in FIG. 10, and their description is omitted.

While the vacancy information is displayed on the mobile terminal 200, the mobile terminal 200 may receive selection of the seat in the vacancy information (Step S2501).

The server 300C has the operation reception unit 331 receive a selection operation of the seat on the mobile terminal 200, and has the seat information search unit 332 search the seat information database 350 by coordinates that represents the position of the selected seat (Step S2502).

Next, the server 300C has the seat information search unit 332 obtain the seat information that corresponds to the selected coordinates (Step S2503), and has the transmitter unit 315 transmit the seat information to the mobile terminal 200 (Step S2504).

In response to receiving the seat information, the mobile terminal 200 associates the received seat information with the selected seat of the vacancy information, and displays the seat information (Step S2505).

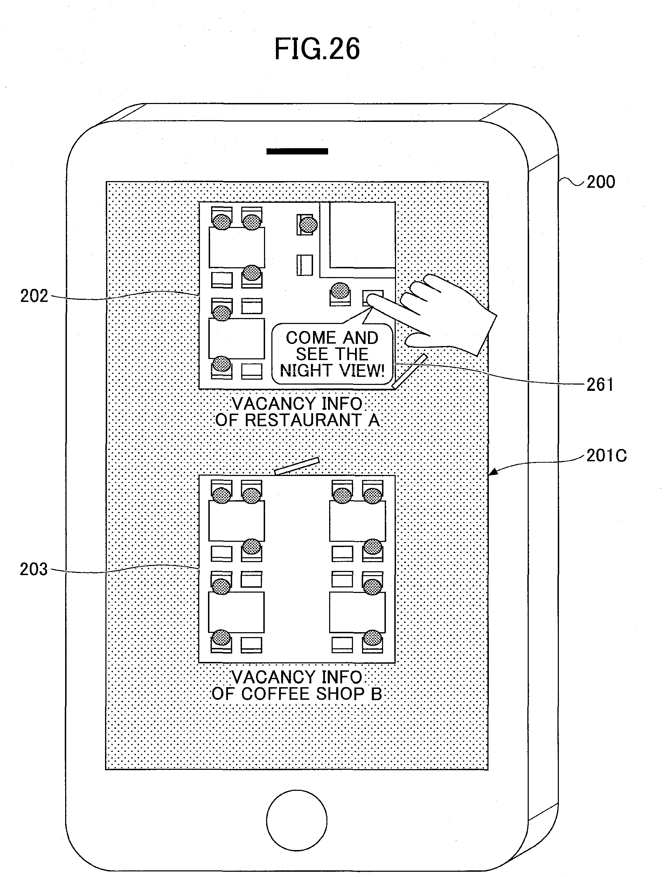

FIG. 26 is a diagram that illustrates an example of a screen on the mobile terminal 200 according to the fourth embodiment. A screen 201C illustrated in FIG. 26 illustrates a case where a seat having the position (x1, y1) has been selected in the vacancy information of the restaurant A.

In the embodiment, for example, when the user of the mobile terminal 200 taps on the seat at the position (x1, y1), the mobile terminal 200 receives the tap as the selection of the seat. Then, the server 300C searches the seat information database 350 by the position of the seat (x1, y1), obtains the seat information of "COME AND SEE THE NIGHT VIEW!", and transmits it to the mobile terminal 200. The mobile terminal 200 displays the received seat information and the seat information 261 corresponding to the selected seat.

As above, in the embodiment, when a seat shown by the vacancy information is selected, information associated with the seat can be displayed. Therefore, for example, an eating house or the like having a terminal device 400 installed can provide services depending on seats, or can exhibit features of seats. Therefore, for example, if there are seats less frequently occupied by customers due to the layout restriction and the like, by providing and exhibiting some benefit to customers to take the corresponding seats, a customer attracting effect may be expected.

### (Fifth embodiment)

In the following, a fifth embodiment will be described with reference to the drawings. The fifth embodiment obtains the vacancy information by using coordinates that represents the positions of fixtures such as chairs and tables in a facility, which is different from the first and fourth embodiments. Therefore, in the following description of the fifth embodiment, only different points from the first and fourth embodiments will be described, the same codes are assigned to elements that have substantially the same functions as in the first and fourth embodiments, and their description is omitted.

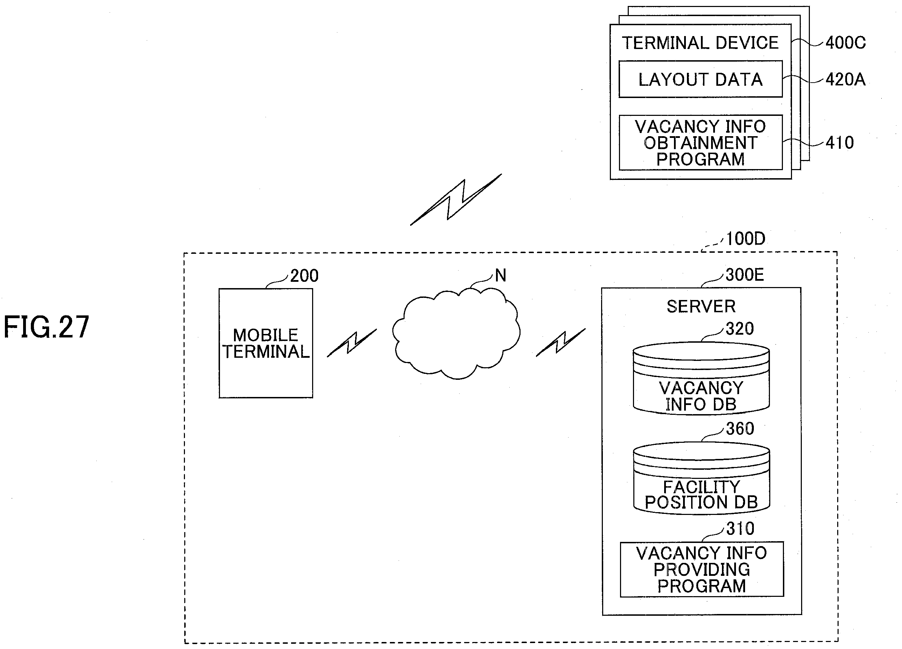

FIG. 27 is a diagram that illustrates an example of a system configuration of a vacancy information providing system 100D according to the fifth embodiment.

In the vacancy information providing system 100D in the embodiment, a server 300E includes a facility position database 360, and a terminal device 400C includes a layout data 420A.

The facility position database 360 in the embodiment stores information that represents the positions of facilities whose vacancy information is stored in the vacancy information database 320. The layout data 420A of the terminal device 400C in the embodiment includes information that represents, for example, the positions of seats and the like in a facility having the terminal device 400C installed.

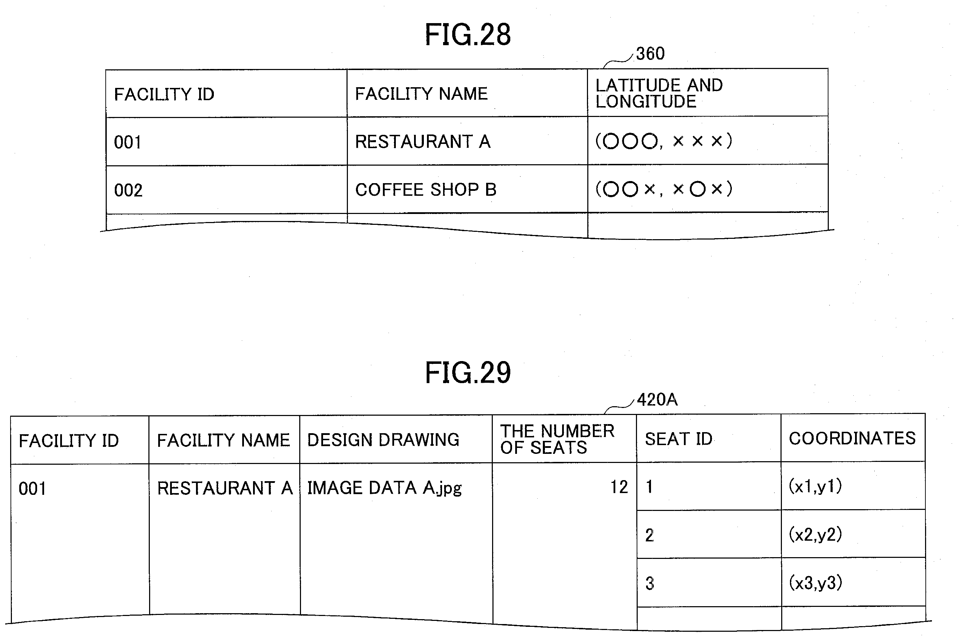

FIG. 28 is a diagram that illustrates an example of the facility position database 360 according to the fifth embodiment. The facility position database 360 in the embodiment includes information items of facility IDs, facility names, latitudes and longitudes. The item "LATITUDE AND LONGITUDE" in the embodiment represents, for example, the latitude and longitude of the center of an area that represents the site of a facility identified by the facility ID. Also, in the facility position database 360 in the embodiment, if the site of a facility identified by the facility ID has a rectangular shape, the value of the item "latitude and longitude" may include the latitudes and longitudes of four points of the rectangle.

Note that the facility position database 360 may be input in the terminal device 400 by an administrator of the facility that has the terminal device 400 installed, and transmitted to the server 300E. Also, the server 300E may obtain the facility position database 360 by searching general map information by a facility ID and a facility name stored in the vacancy information database 320.

FIG. 29 is a diagram that illustrates an example of the layout data 420A according to the fifth embodiment. The layout data 420A in the embodiment includes information items of facility IDs, facility names, design drawings, the numbers of seats, seat IDs, and coordinates. The value of the item "SEAT ID" is an identifier to identify a seat of a chair or the like installed in a facility identified by the corresponding facility ID. The value of the item "COORDINATES" is coordinates that represents the position of the seat in the corresponding "DESIGN DRAWING".

In the example in FIG. 29, a seat having the seat ID "1" installed in the restaurant A having the facility ID "001" is placed at a position having coordinates (x1, y1) in an image displayed by "IMAGE DATA A.jpg". Note that the coordinates (x1, y1) in the embodiment, for example, may represent the center point of the display area of an image that represents the seat having the seat ID "1" in the entire image, or may represent a predetermined reference point of the image that represents the seat having the seat ID "1". If the image that represents a seat has a rectangular shape, the reference point may be, for example, the vertex at the upper left of the rectangle.

In the embodiment, the coordinates of the seats may be input by an administrator of a facility that has the terminal device 400 installed. Also, the coordinates of seats in the embodiment may be obtained, for example, by analyzing images and design drawings of a facility.

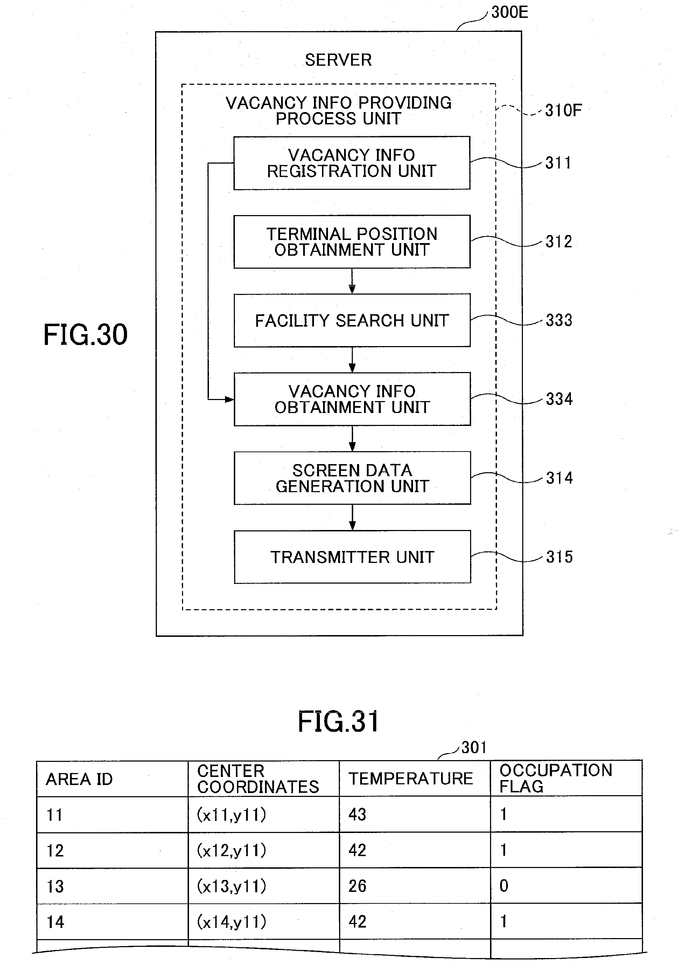

FIG. 30 is a diagram that illustrates a functional configuration of the server 300E according to the fifth embodiment. The server 300E in the embodiment includes a vacancy information providing process unit 310F. The vacancy information providing process unit 310F in the embodiment includes a facility search unit 333 in addition to the units included in the vacancy information providing process unit 310A of the first embodiment. Also, the vacancy information providing process unit 310F in the embodiment includes a vacancy information obtainment unit 334 instead of the vacancy information search unit 313.

Based on the positional information of the mobile terminal 200, the facility search unit 333 in the embodiment searches the facility position database 360, to extract a facility ID of the facility having the position that corresponds to the positional information. More specifically, the facility search unit 333 extracts facilities whose latitudes and longitudes are included, for example, within a circle having the center at the position of the mobile terminal 200 and a predetermined radius in the facility position database 360.

The vacancy information obtainment unit 334 obtains the vacancy information of the facility represented by a facility ID extracted by the facility search unit 333 from the vacancy information database 320.

FIG. 31 is a diagram that illustrates an example of person detection data. The person detection data 301 illustrated in FIG. 30 is generated by the person detection unit 411, temporarily stored in the terminal device 400A, and verified with the layout data 420.

The person detection data 301 in the embodiment includes information items of area IDs, center coordinates, temperatures, and occupation flags. The value of the item "AREA ID" represents an identifier of one of areas viewed from the ceiling of the room partitioned in advance. In the embodiment, the temperature and existence and non-existence of persons are detected for each of the areas. Note that in the embodiment, the areas are assumed to be rectangular.

The value of the item "CENTER COORDINATES" represents the coordinates of the center of the area identified by the corresponding area ID. The value of the item "TEMPERATURE" is the temperature of the area identified by the corresponding area ID, detected by a thermopile. The value of the item "OCCUPATION FLAG" is a value that represents whether a person exists in the area identified by the corresponding area ID. In the embodiment, the value "1" of the item "OCCUPATION FLAG" represents that a person exists in the corresponding area, and the value "0" of the item "OCCUPATION FLAG" represents that no person exists in the corresponding area.

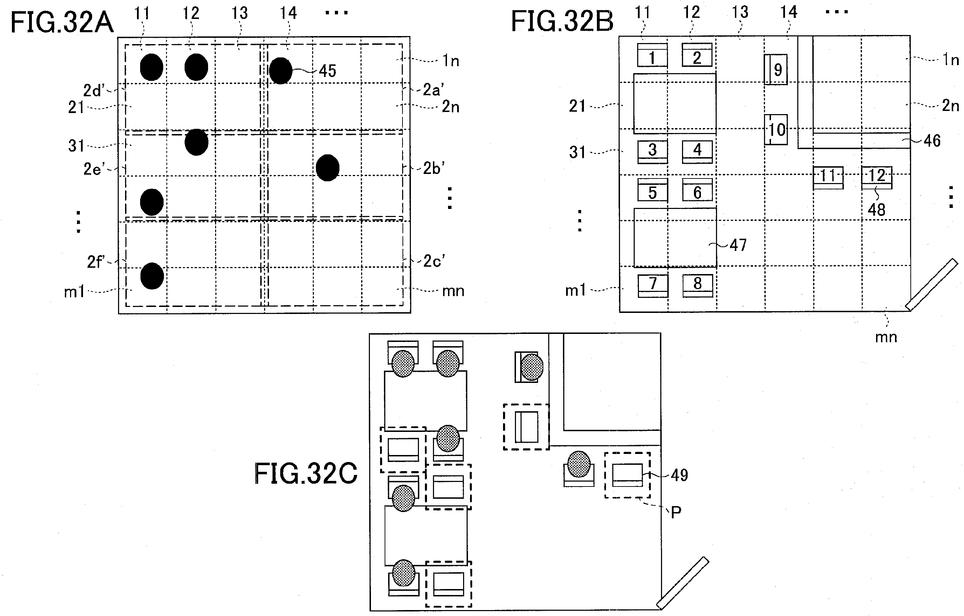

In the following, with reference to FIGs. 32A-32C, obtainment of the vacancy information in the embodiment will be described. FIGs. 32A-32C are diagrams that illustrate obtainment of vacancy information according to the fifth embodiment.

FIG. 32A is a diagram that illustrates person detection data 301 obtained in the room of the restaurant A. As illustrated in FIG. 32A, the room of the restaurant A is partitioned into areas 11, 12, 13, ..., 1n, 21, ..., 2n, ..., m1, ..., mn, starting from the upper left of an image showing the design drawing of IMAGE DATA A.jpeg. Also, in the person detection data 301, the values of the occupation flags are "1" for the area 11, 12, and 14. Therefore, persons exist in the areas 11, 12, and 14 as illustrated in FIG. 32A.

FIG. 32B represents a state of the layout data 420A having been verified with the person detection data 301.

The layout data 420A in the embodiment stores the seat IDs and coordinates of the seats. Therefore, in the embodiment, it is possible to know where the seats are placed at positions that overlap with the areas in the person detection data 301. In the embodiment, for example, the seat having the seat ID "1" is placed in the area 11, and the value of occupation flag is "1" for the area 11. Therefore, in the embodiment, it is possible to determine that the seat having the seat ID "1" is occupied by a person.

FIG. 32C is a diagram that illustrates an example of the vacancy information in the embodiment. In the embodiment, as above, by verifying the values of the occupation flags in the partitioned areas of the room with the coordinates that represent the positions of the seats, the vacancy information can includes vacant seats information with their positions.

Therefore, in the embodiment, as illustrated in FIG. 32C, vacant seats can be displayed with frames such as a rectangle P.

Note that in the embodiment, the vacancy information is image data obtained by superimposing the layout data 420A of the facility, with an image that represents existence and non-existence of persons, but it is not limited to that. The vacancy information in the embodiment may be the number of vacant seats in the facility included in the layout data.

Note that in the embodiment, in the layout data 420A, although the coordinates of a seat are associated with the seat ID, the coordinates of the seat may be associated with, for example, the ID of the table that corresponds to the seat.

In the embodiment, by associating the coordinates of seats with the coordinates of the table, for example, if multiple persons want to sit around a table, it is possible to provide information about the number of vacant tables, and even vacant tables for specific numbers of persons.

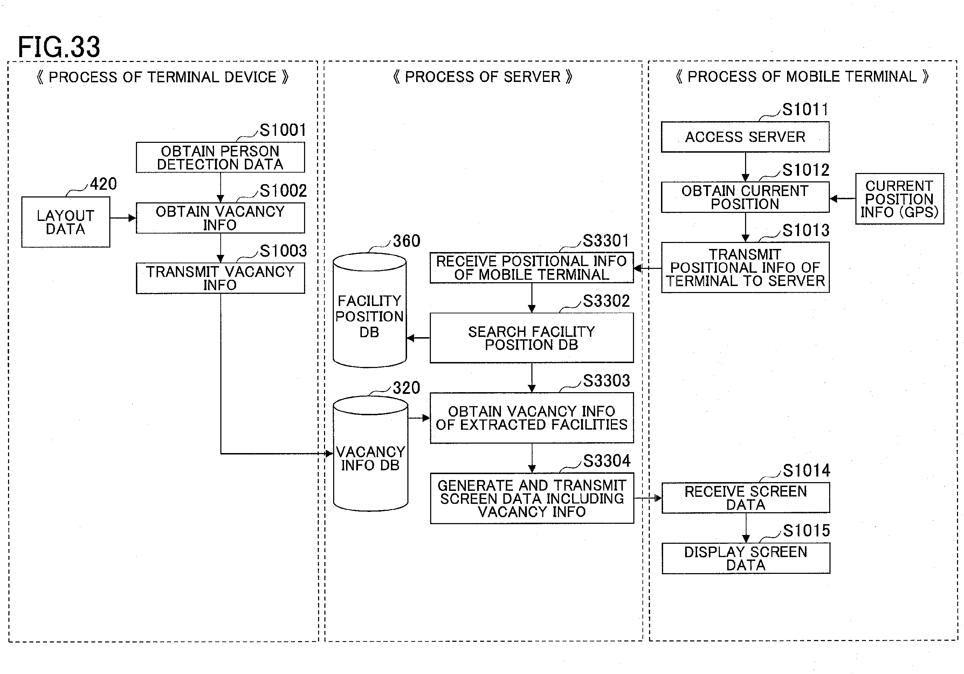

Next, with reference to FIG. 33, obtainment of the vacancy information will be described that is executed by the server 300E in the embodiment, by referring to the facility position database 360. FIG. 33 is a sequence chart that illustrates operations of the vacancy information providing system 100D according to the fifth embodiment.

Step S3301 in FIG. 33 is substantially the same as Step S1021 in FIG. 10, and its description is omitted.

Next, the server 300E has the facility search unit 333 search the facility position database 360 by the positional information of the mobile terminal 200, to extract the facility ID of the facility that corresponds to the positional information (Step S3302). The facility ID is extracted by the facility search unit 333 as described above.

Next, the vacancy information obtainment unit 334 refers to the vacancy information database 320, and obtains the vacancy information of the facility that corresponds the facility ID extracted at Step S3302 (Step S3303). Step S3304 in FIG. 33 is substantially the same as Step S1024 in FIG. 10, and its description is omitted.

As above, in the embodiment, by having the layout data 420A include coordinates of positions at which fixtures such as seats and the like are placed in the facility, it is possible to provide more detailed vacancy information than vacancy information that simply represents vacant seats.

### (Sixth embodiment)

In the following, a sixth embodiment will be described with reference to the drawings. The sixth embodiment obtains the vacancy information that reflects a reservation state of a facility when obtaining the vacancy information, which is different from the fifth embodiment. Therefore, in the following description of the sixth embodiment, only different points from the fifth embodiment will be described, the same codes are assigned to elements that have substantially the same functions as in the fifth embodiment, and their description is omitted.

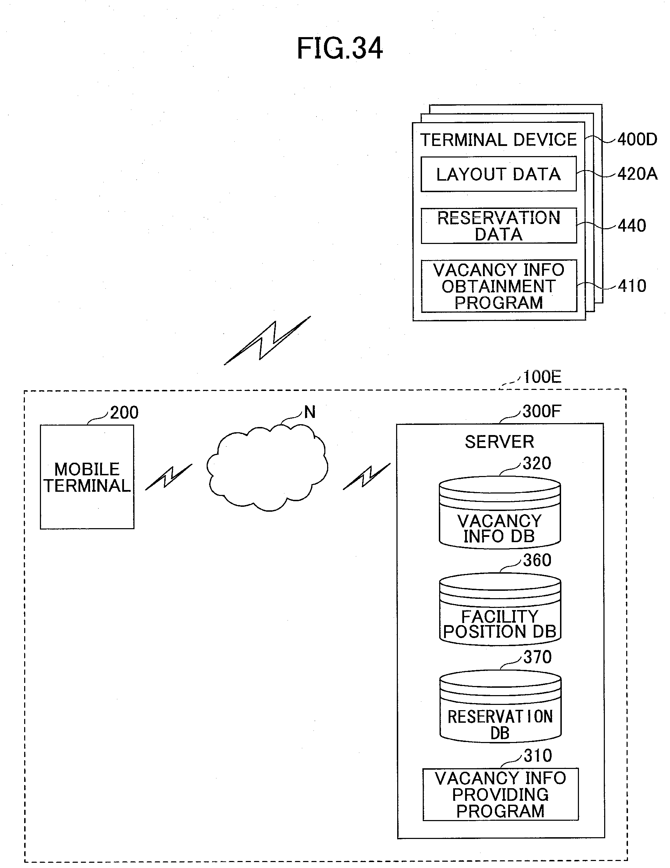

FIG. 34 is a diagram that illustrates an example of a system configuration of a vacancy information providing system according to a sixth embodiment.

In the vacancy information providing system 100E in the embodiment, the server 300E includes a vacancy information database 320, a facility position database 360, and a reservation database 370, and a terminal device 400D includes reservation data 440.

The reservation database 370 in the embodiment has reservation data registered that is transmitted from the terminal device 400D.

The reservation data of the terminal device 400D in the embodiment represents reservation states of facilities that have the terminal devices 400D installed, respectively. Specifically, the reservation data 440 includes data that represents the positions of reserved seats and reserved dates and times of the seats at facilities that have the terminal devices 400D installed.

The reservation data 440 in the embodiment may be input, for example, by using reservation reception functions of the terminal device 400D, by an administrator of the terminal device 400D, or an employee at a facility having the terminal device 400D installed. The reservation data 440 in the embodiment input into the terminal device 400D may be temporarily stored in the terminal device 400D, and transmitted to the server 300E at a predetermined timing.

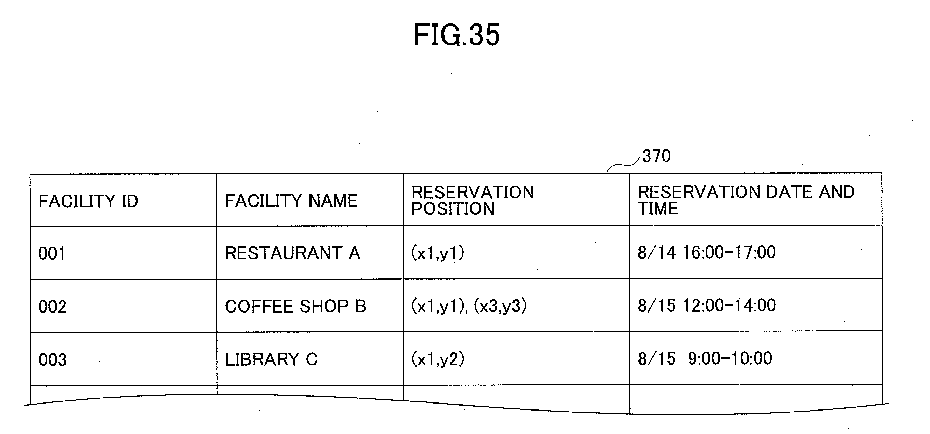

FIG. 35 is a diagram that illustrates an example of the reservation database 370 according to the sixth embodiment. The reservation database 370 in the embodiment includes information items of facility IDs, facility names, addresses, reservation positions, reservation dates and times. In the reservation database 370 in the embodiment, the item "FACILITY ID" is associated with the other items. In the following description, information that includes a value of the item "FACILITY ID" and associated values of to the items will be referred to as "reservation information".

The value of the item "RESERVATION POSITION" represents the position of a reserved seat in the corresponding facility. The position of a seat in the embodiment is coordinates that represents the position of the seat in a design drawing that corresponds to the facility ID.

The value of the item "RESERVATION DATE AND TIME" represents date and time when the corresponding seat is reserved.

In FIG. 35, for example, a seat in the restaurant A having the facility ID "001" at a position of coordinates (x1, y1) in an image displayed by "IMAGE DATA A.jpg", which is the design drawing, is reserved for 16:00-17:00 on August 14.

Also, in the reservation database 370 in the embodiment, the number of reserved seats is the number of pairs of coordinates that are stored as the value of the item "SEAT POSITION".

In FIG. 35, for example, the reservation information that includes the facility ID "002" stores two pairs of coordinates as the value of the item "RESERVATION POSITION". Therefore, it is possible to understand that the reservation information that includes the facility ID "002" represents a reservation for the two seats.

Note that in the example in FIG. 35, the position of the reserved seat is identified by representing the reserved seat by the coordinates of the seat, but a method to identify a reserved seat is not limited to that. The reservation database 370 may include, for example, an item of "SEAT ID" instead of the item "RESERVATION POSITION". In this case, the value of the item "SEAT ID" can identify a reserved seat by the seat ID.

Also, the reservation information in the embodiment assumes to include the value of the item "ADDRESS", but the value of the item "ADDRESS" may not be included.

Also, in the embodiment, for example, information transmitted to the server 300E by the terminal device 400D as reservation data that has been input on the terminal device 400D and has been associated with the facility ID of the facility having the terminal device 400D installed, may be stored in the reservation database 370 as the reservation information.

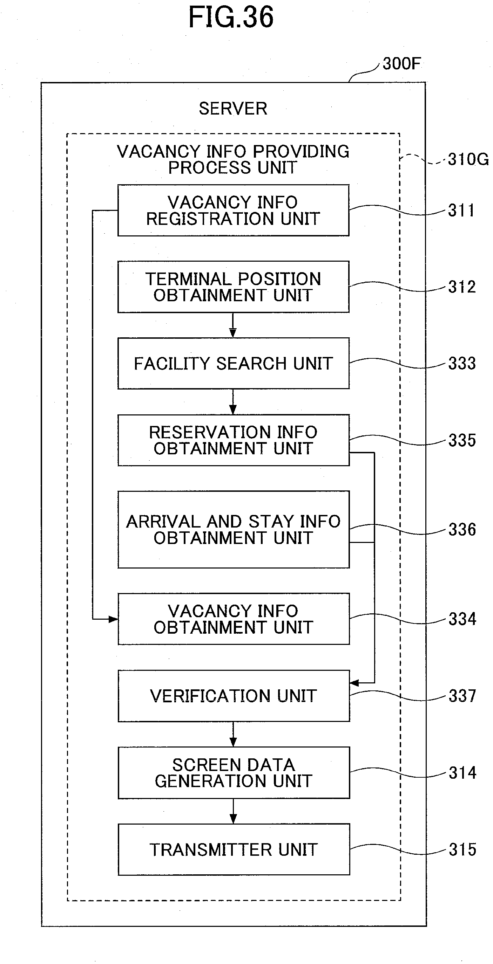

FIG. 36 is a diagram that illustrates a functional configuration of a server 300F according to the sixth embodiment. The server 300F in the embodiment includes a vacancy information providing process unit 310G. The vacancy information providing process unit 310G in the embodiment includes a reservation information obtainment unit 335, an arrival and stay information obtainment unit 336, and a verification unit 337 in addition to the units included in the vacancy information providing process unit 310F of the fifth embodiment.

The reservation information obtainment unit 335 in the embodiment refers to the reservation database 370, to obtain reservation information that corresponds to the facility ID extracted by the facility search unit 333.

The arrival and stay information obtainment unit 336 in the embodiment obtains an expected arrival time when the user of the mobile terminal 200 arrives at a facility that corresponds to the extracted facility ID, and an expected stay time of the user. In the embodiment, the expected arrival time and the expected stay time may be set in advance. Specifically, the expected arrival time in the embodiment is assumed to be ten minutes after the positional information was obtained from the mobile terminal 200, and the expected stay time is assumed to be one hour. The expected arrival time and the expected stay time may be stored in, for example, the auxiliary storage unit 34, the memory unit 35 or the like included in the server 300F.

The verification unit 337 in the embodiment verifies the vacancy information obtained from the vacancy information database 320 with the reservation information, the expected arrival time, and the expected stay time, and obtains vacancy information for a period starting from the expected arrival time until the expected stay time ends.

In other words, in the embodiment, the vacancy information is provided as a dedicated (available) place (seat) for the user of the mobile terminal 200 for a desired stay time after arriving at a desired facility. Therefore, according to the embodiment, it is possible avoid a circumstance, for example, where a user who has been staying in a facility based on the current vacancy information, needs to vacate the seat during the use due to a reservation made by another user.

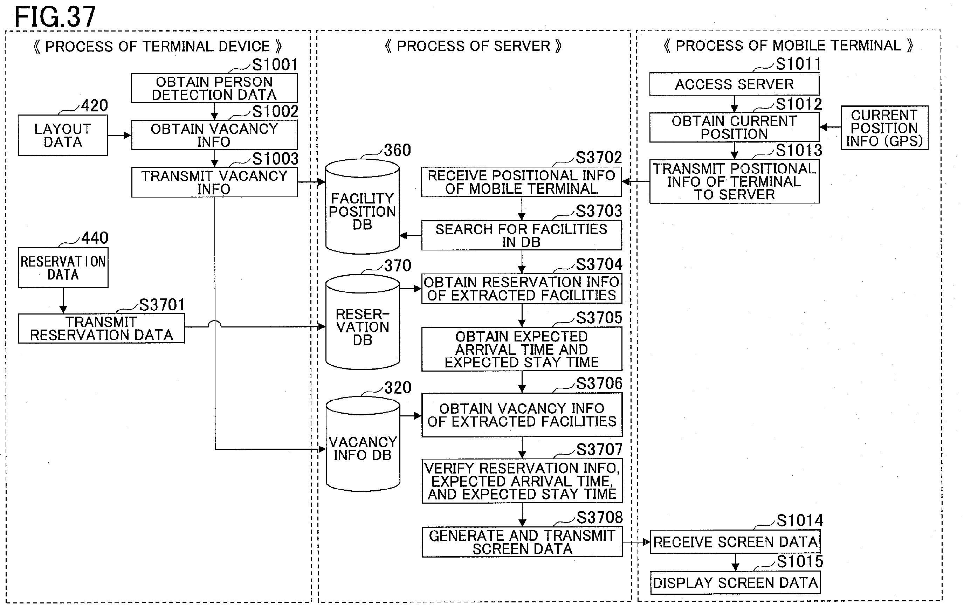

FIG. 37 is a sequence chart that illustrates operations of the vacancy information providing system 100E according to the sixth embodiment.

In FIG. 37, steps having the same codes as in FIG. 10 are executed as described in FIG. 10.

First, operations of the terminal device 400D in the embodiment will be described. In response to receiving the input of the reservation data 440, the terminal device 400D in the embodiment transmits reservation information in which the facility ID having the terminal device 400D installed is associated with the reservation data 440, to the server 300F (Step S3701). The transmitted reservation information is stored in the reservation database 370.

Next, operations of the server 300F in the embodiment will be described.

Also, Steps S3701 to S3702, and Step S3703 in FIG. 37 are substantially the same as Step S3301 and S3302 in FIG. 33, respectively, and their description is omitted.

The vacancy information providing process unit 310G in the embodiment has the reservation information obtainment unit 335 refer to the reservation database 370, for each facility ID extracted at Step S3703, to obtain reservation information that corresponds to the facility ID (Step S3704). Next, the vacancy information providing process unit 310G has the arrival and stay information obtainment unit 336 obtain the expected arrival time and the expected stay time (Step S3705).

Next, the vacancy information providing process unit 310G has the vacancy information obtainment unit 334 obtain the facility ID and the corresponding vacancy information for each of the extract facility IDs from the vacancy information database 320 (Step S3706).

Next, the vacancy information providing process unit 310G has the verification unit 337 verify the reservation information, the expected arrival time, the expected stay time, and the vacancy information for each extracted facility ID, and obtains the vacancy information having the verification result reflected (Step S3707). Note that the process by the verification unit 337 will be described in detail later.

Next, the vacancy information providing process unit 310G has the screen data generation unit 314 generate screen data based on the vacancy information having the verification result reflected, and has the transmitter unit 315 transmit the generated screen data to the mobile terminal 200 (Step S3708).

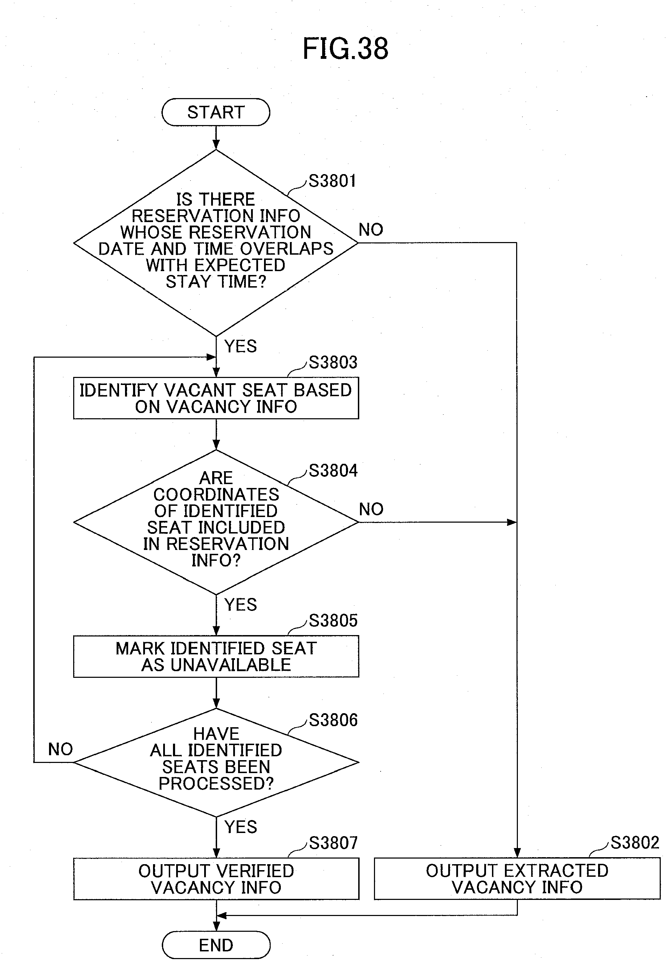

In the following, with reference to FIG. 38, the process of the verification unit 337 in the embodiment will be described. FIG. 38 is a flowchart that illustrates the process of the verification unit 337 according to the sixth embodiment

The verification unit 337 in the embodiment determines whether there exists reservation information whose reservation date and time overlap the expected stay time in the extracted reservation information (Step S3801).

At Step S3801, if such reservation time does not exist in the extracted reservation information, the vacancy information providing process unit 310G outputs the vacancy information extracted by the vacancy information obtainment unit 334 to the screen data generation unit 314 (Step S3802), and terminates the process.

At Step S3801, if such reservation time exists, the verification unit 337 identifies the vacant seat in the facility based on the vacancy information (Step S3803). Specifically, the verification unit 337 in the embodiment verifies the value of the occupation flag of each partitioned area in the facility with the coordinates that represent the position of the seat in the vacancy information, to identify vacant seats with their specific positions.

Next, the verification unit 337 determines whether the identified coordinates of the seats are included in the corresponding reservation information at Step S3801 (Step S3804). In other words, the verification unit 337 determines whether the reservation information whose expected stay time overlaps the reservation date and time, includes the coordinates of the seat that is currently vacant.

At Step S3804, if the identified coordinates of the seat are not included in the corresponding reservation information, the verification unit 337 goes forward to Step S3802.

At Step S3804, if the identified coordinates of the seat are included in the corresponding reservation information, the verification unit 337 determines the identified seat as an unavailable seat (Step S3805).

Next, the verification unit 337 determines whether all vacant seats in the vacancy information extracted by the vacancy information obtainment unit 334 have been processed (Step S3806).

At Step S3806, if not having processed all seats, the verification unit 337 goes back to Step S3803.

At Step S3806, if having processed all seats, the verification unit 337 outputs the vacancy information obtained from the vacancy information extracted by the vacancy information obtainment unit 334, and verified to reflect the information of the unavailable seats, to the screen data generation unit 314 (Step S3807), and terminates the process.

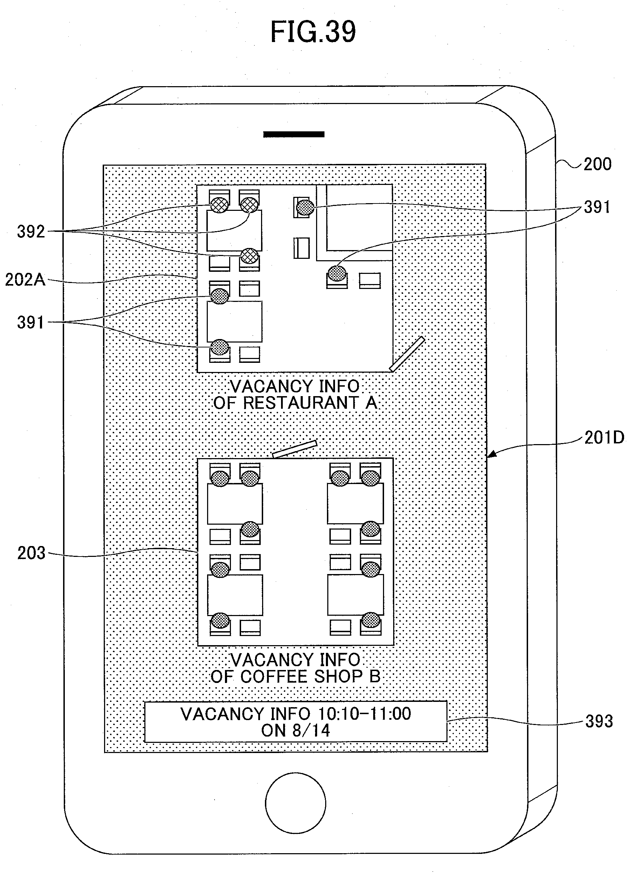

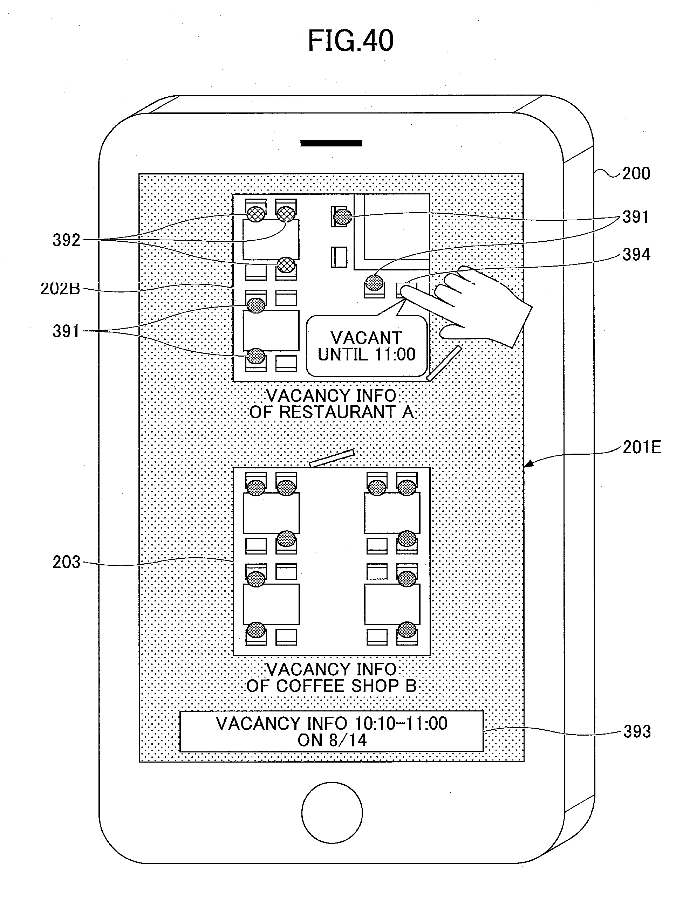

In the following, with reference to FIG. 39 and FIG. 40, the vacancy information having the verification result reflected will be described. FIGs. 39 and 40 illustrate a case where the expected stay time is 10:10-11:00. FIG. 39 is a first diagram that illustrates an example of a screen on the mobile terminal 200 according to the sixth embodiment.

A screen 201D illustrated in FIG. 39 displays, as the vacancy information of the restaurant A, vacancy information 202A having the verification result reflected, and the vacancy information 203 of the coffee shop B that includes no reservation information in which the expected stay time overlaps the reservation date and time.

In the vacancy information 202A of the restaurant A, seats 391 represent seats that were determined as unavailable when a request for obtaining the vacancy information was made by the mobile terminal 200. An unavailable seat is a seat, for example, occupied by a person.

Also, in the vacancy information 202A, seats 392 represent seats that were determined as available when the request for obtaining the vacancy information was made by the mobile terminal 200, but are going to be unavailable during the expected stay time. In other words, the seat 392s are seats that the verification unit 337 determined as unavailable. Specifically, the seats 392 are vacant when the user of the mobile terminal 200 arrives at the restaurant A, but are going to be used in the expected stay time by another user who has made the reservation.

Also, a screen 201D in the embodiment displays a message 393 indicating that displayed is the vacancy information during the expected stay time.

In the embodiment, as illustrated in FIG. 39, unavailable seats at a timing when the vacancy information was obtained, may be displayed in a different way from the way for those seats that are going to be unavailable in the expected stay time. By displaying these two types of seats in different ways, for example, it is possible to provide information about changing congestion of the facility during the expected stay time for the user.

FIG. 40 is a second diagram that illustrates another example of a screen on the mobile terminal 200 according to the sixth embodiment.

On a screen 201E illustrated in FIG. 40, if a seat is selected, the reservation data of the selected seat is displayed.

FIG. 40 illustrates a case where a seat 394 is selected based on the vacancy information of the restaurant A. The coordinates that represent the position of the seat 394 are (x1, y1).

In the embodiment, once the seat 394 is selected, it is determined whether the coordinates of the selected seat 394 are included in the reservation information of the restaurant A extracted by the reservation information obtainment unit 335; and if the coordinates of the seat 394 are not included, a message "VACANT UNTIL 11:00" is displayed as in FIG. 40.

Also, in FIG. 40, for example, if seats 392 are selected, a part of the reservation data of the seats 392 may be displayed with reference to the extracted reservation information. A part of the reservation data of the seats 392 may be date and time when the seats 392 are reserved.

In the embodiment, on the screen 201E, by displaying the reservation data for respective selected seats, for example, it is possible to provide the reservation state of a seat selected by the user.

Note that vacancy information having the verification result reflected in the embodiment is, in other words, the vacancy information having the reservation state reflected.

### (Seventh embodiment)

In the following, a seventh embodiment will be described with reference to the drawings. In the seventh embodiment, the expected stay time is input on the mobile terminal 200, which is different from the sixth embodiment. Therefore, in the following description of the seventh embodiment, only different points from the sixth embodiment will be described, the same codes are assigned to elements that have substantially the same functions as in the sixth embodiment, and their description is omitted.

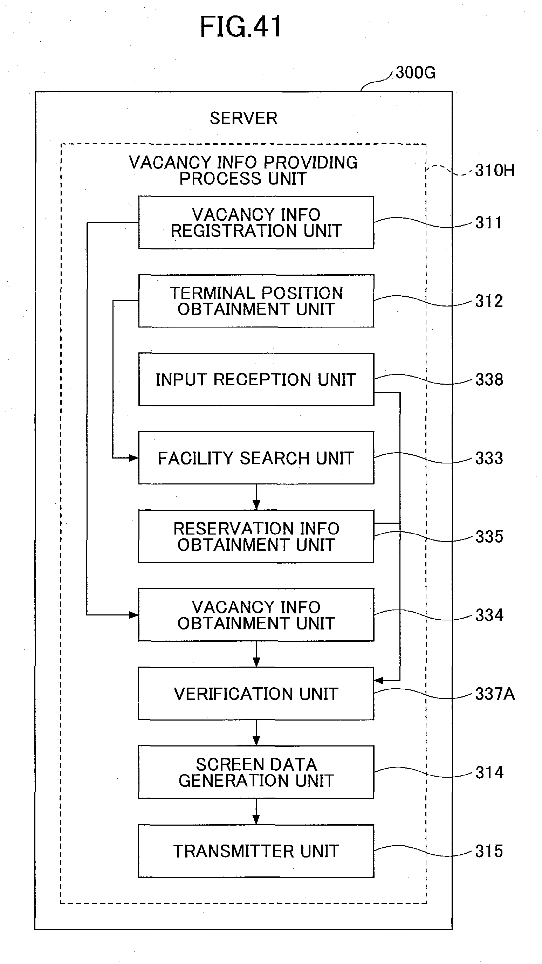

FIG. 41 is a diagram that illustrates a functional configuration of a server 300G according to the seventh embodiment. The server in the embodiment includes a vacancy information providing process unit 310H.

The server 300G in the embodiment has the mobile terminal 200 display the vacancy information when the positional information was obtained from the mobile terminal 200, along with an input field of the expected stay time. Then, the server 300G receives input in the input field of the expected stay time, verifies the vacancy information with the reservation information, the expected arrival time, and the expected stay time, and transmits screen data to display the vacancy information having the verification result reflected, to the mobile terminal 200.

In response to receiving this screen data, the mobile terminal 200 has the screen transition from displaying the vacancy information to displaying the vacancy information having the verification result reflected.

The vacancy information providing process unit 310H in the embodiment includes an input reception unit 338 instead of the arrival and stay information obtainment unit 336. Also, the vacancy information providing process unit 310H in the embodiment includes a verification unit 337A.

The input reception unit 338 receives the input of the expected stay time that has been input on the mobile terminal 200. In addition to the process executed by the verification unit 337 of the sixth embodiment, the verification unit 337A calculates expected arrival times to facilities based on the positional information of the mobile terminal 200.

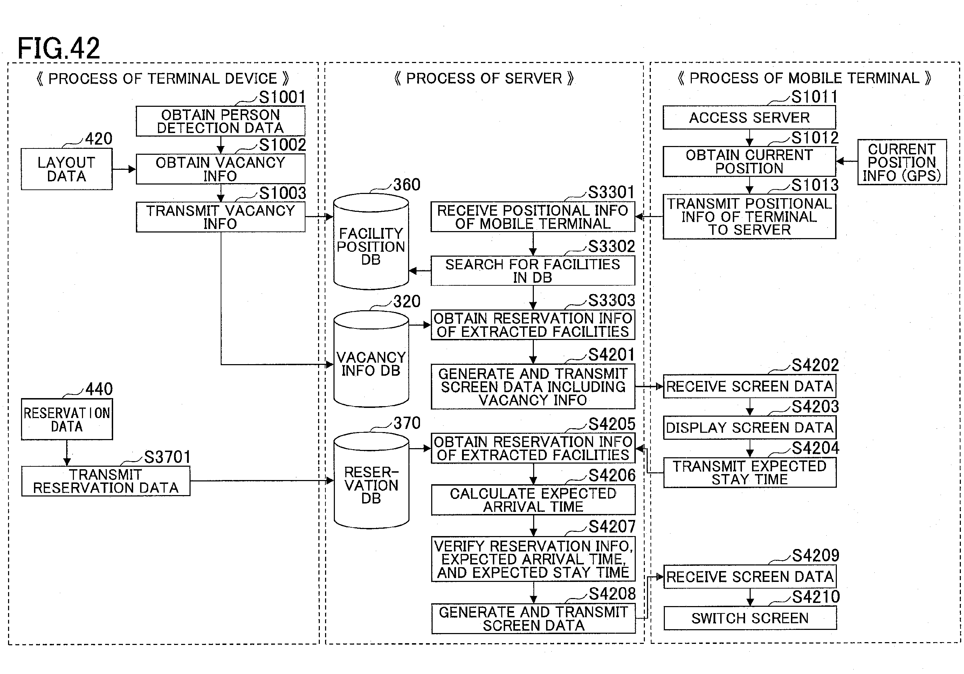

FIG. 42 is a sequence chart that illustrates operations of the vacancy information providing system according to the seventh embodiment.

In FIG. 42, steps having the same codes as in FIG. 10 are executed as described in FIG. 10. Also, in FIG. 42, steps having the same codes as in FIG. 37 are executed as described in FIG. 37.

The vacancy information providing process unit 310H in the embodiment has the screen data generation unit 314 transmit the obtained vacancy information and screen data of a screen to display the input field of the expected stay time, to the mobile terminal 200 (Step S4201).

The mobile terminal 200 receives the screen data (Step S4202), and displays the screen on which the vacancy information and the input field of the expected stay time are displayed (Step S4203).

Next, the mobile terminal 200 receives input of an expected stay time in the input field, and transmits the expected stay time to the server 300G (Step S4204).

In the server 300G, in response to receiving the expected stay time by the input reception unit 338, the vacancy information providing process unit 310H has the reservation information obtainment unit 335 extract the reservation information of each of the facilities extracted at Step S3302 (Step S4205).

Next, the vacancy information providing process unit 310H has the verification unit 337A calculate expected arrival times to the extracted facilities, based on the positional information received at Step S3301, the time when the positional information is received, and the positions of the facilities extracted at Step S3302 (Step S4206).

Note that the calculation of the expected arrival times needs a value that represents the traveling speed of the user of the mobile terminal 200. In the embodiment, for example, a predetermined speed may be set in advance as the traveling speed. Also, in the embodiment, the traveling speed of the mobile terminal 200 may be calculated from a history of the positional information of the mobile terminal 200.

Next, the verification unit 337A verifies the calculated expected arrival time, the expected stay time included in the input information, and the reservation information with the vacancy information (Step S4207). Steps S4207 and S4208 are substantially the same as Steps Step S3707 and Step S3708 in FIG. 37, and their description is omitted.

In response to receiving the screen data to display the vacancy information having the verification result reflected from the server 300G (Step S4209), the mobile terminal 200 switches the display from the screen displayed at Step S4203, to the screen of the screen data received at Step S4209 (Step S4210). Note that, a screen displayed at Step S4210 is, for example, the screen illustrated in FIG. 39 or FIG. 40.

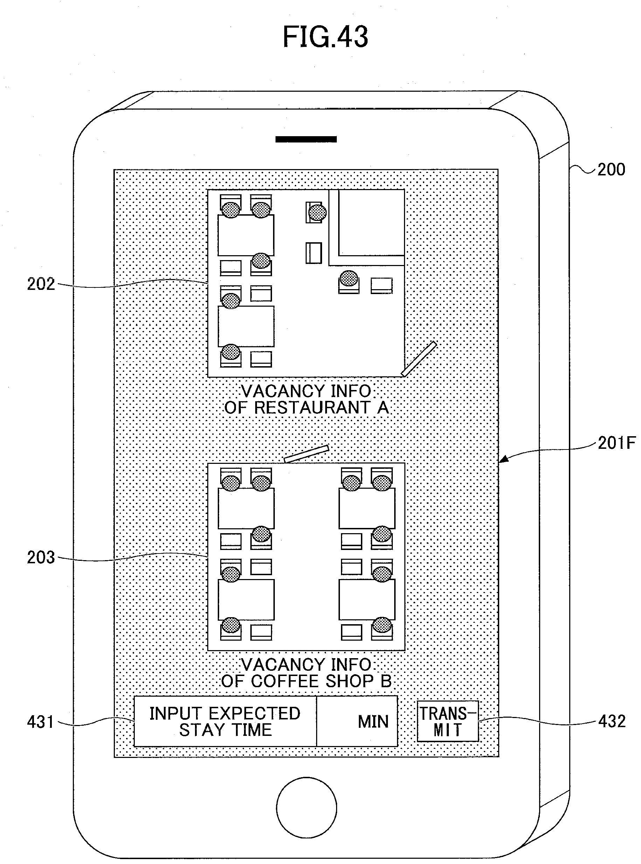

In the following, with reference to FIG. 43, an example of the screen on which the input field of the expected stay time is displayed will be described. FIG. 43 is a diagram that illustrates an example of a screen on the mobile terminal 200 according to the seventh embodiment.

On a screen 201F illustrated in FIG. 43, the vacancy information of the restaurant A and the coffee shop B is displayed as the vacancy information of the time when the server 300G received the positional information of the mobile terminal 200.

Also, in the embodiment, an input field 431 of the expected stay time and a transmission button 432 are displayed. In the embodiment, if an expected stay time is input in the input field 431 and the transmission button 432 is operated, the input expected stay time is transmitted to the server 300G.

As above, in the embodiment, it is possible to provide the vacancy information having the reservation information reflected, and hence, the same effects can be obtained as in the sixth embodiment.

Note that when displaying the vacancy information, the mobile terminal 200 may be configured to be switchable by a setting that selects one of displaying the vacancy information once before reflecting the reservation information as in the embodiment, and displaying only the vacancy information having the reservation information reflected.

The present invention has been described based on the embodiments. Further, the present invention is not limited to these embodiments, but various variations and modifications may be made without departing from the scope of the present invention.

The present application is based on and claims the benefit of priority of Japanese Priority Application No. 2015-058022, filed on March 20, 2015, and Japanese Priority Application No. 2016-004182, filed on January 13, 2016, with the Japanese Patent Office, the entire contents of which are hereby incorporated by reference.

## Claims

1. An information processing system, comprising:
a terminal position information obtainment unit (312) configured to obtain positional information of a mobile terminal (200);
a person detection unit (411) configured to obtain person detection data representing existence or non-existence of a user at a place available for users in one or more facilities;
a vacancy information generation unit (318) configured to generate the vacancy information, by using image data representing a layout of the one or more facilities and the person detection data;
a vacancy information search unit (313) configured to refer to a vacancy information storage unit (320) storing vacancy information generated by the vacancy information storage unit (320) for one or more facilities, the stored vacancy information including one or more places not occupied by a user in each of the facilities, the places being available for users if not occupied, so as to obtain the vacancy information of the facilities within a predetermined range including the positional information of the mobile terminal (200); and
a transmitter unit (315) configured to transmit the obtained vacancy information to the mobile terminal (200)
**characterised in that** the person detection unit (411) is configured to obtain person detection data by detecting temperature distribution of space in the one or more facilities to be observed, by temperatures detected by temperature sensors (2a to 2f), and configured to detect where a person exists, wherein the temperature detection sensors are thermopiles (2a), wherein the thermopiles (2a) are attached to an illumination device (1) by a ring (12), wherein the illumination device (1) is disposed on the ceiling of the area of the facility.

2. The information processing apparatus as claimed in claim 1, further comprising:
a facility search unit (333) configured to refer to a facility position storage unit storing information representing an identifier to identify each of the facilities and a location of each of the facilities, so as to extract the identifiers of the respective facilities within the predetermined range including the positional information of the mobile terminal (200),
wherein the vacancy information has each of the facilities associated with the identifier identifying the facility,
wherein the vacancy information search unit (313) obtains the vacancy information of the facilities associated with the respective identifiers extracted by the facility search unit, in the vacancy information storage unit (320).

3. The information processing apparatus as claimed in claim 1 or 2, wherein the vacancy information is image data to display an image representing a layout of the facility, superimposed with an image in which existence of a user is denoted at a position of the existence.

4. The information processing apparatus as claimed in any one of claims 1 to 3, further comprising:
a map information search unit (321) configured to search a map information storage unit (320) storing map information by the positional information of the mobile terminal (200), so as to obtain map information that includes a location of the facility whose vacancy information has been obtained,
wherein the transmitter unit (315) transmits the vacancy information and the map information obtained by the map information search unit (321) to the mobile terminal (200).

5. The information processing apparatus as claimed in any one of claims 1 to 4, further comprising:
an advertisement information search unit (322) configured to search an advertisement information storage unit (320) storing advertisement information associated with a predetermined area, by the positional information of the mobile terminal (200), so as to obtain the advertisement information associated with the predetermined area including the positional information of the mobile terminal (200),
wherein the transmitter unit (315) transmits the vacancy information and the advertisement information obtained by the advertisement information search unit (322) to the mobile terminal (200).

6. The information processing apparatus as claimed in claim 2, further comprising:
a reservation information obtainment unit (335) configured to refer to a reservation information storage unit (320) in which the identifier of the facility is associated with reservation data representing a reservation state of each of the places available for users in the facility, so as to obtain the reservation information associated with the identifier extracted by the facility search unit (333); and
a verification unit (337) configured to verify an expected arrival time at the facility associated with the extracted identifier, an expected stay time at the facility associated with the extracted identifier, the reservation information obtained by the reservation information obtainment unit (335), and the vacancy information obtained by the vacancy information obtainment unit (318),
wherein the verification unit (337) outputs the vacancy information including the places going to become unavailable during the expected stay time.

7. The information processing apparatus as claimed in claim 6, wherein the verification unit (337) calculates the expected arrival time, based on the positional information of the mobile terminal (200) and the information representing the location of the facility associated with the identifier.

8. The information processing apparatus as claimed in claim 6 or 7, wherein the expected stay time is a time set in advance, or a time input on the mobile terminal (200).

9. A method comprising: obtaining positional information of a mobile terminal (200) by a terminal position information obtainment unit (312), obtaining person detection data, by a person detection unit (411), representing existence or non-existence of a user at a place available for users in one or more facilities, generating, by a vacancy information generation unit (318), the vacancy information, by using image data representing a layout of the one or more facilities and the person detection data, referring, by a vacancy information search unit (313), to a vacancy information storage unit (320) storing vacancy information generated by the vacancy information storage unit (320) for one or more facilities, the stored vacancy information including one or more places not occupied by a user in each of the facilities, the places being available for users if not occupied, so as to obtain the vacancy information of the facilities within a predetermined range including the positional information of the mobile terminal (200), transmitting, by a transmitter unit, the obtained vacancy information to the mobile terminal, the method **characterised in that** obtaining, by the person detection unit (411), person detection data by detecting temperature distribution of space in the one or more facilities to be observed, by temperatures detected by temperature sensors (2a-2f), and configured to detect where a person exists, wherein the temperature detection sensors are thermopiles (2a), wherein the thermopiles (2a) are attached to an illumination device (1) by a ring, wherein the illumination device is disposed on the ceiling of the area of the facility.

## Patentansprüche

1. Informationsverarbeitungssystem, umfassend:
eine Endgerätpositionsinformation-Erlangungseinheit (312), die konfiguriert ist, um Positionsinformationen eines mobilen Endgeräts (200) zu erlangen;
eine Personenerfassungseinheit (411), die konfiguriert ist, um Personenerfassungsdaten zu erlangen, die ein Vorhandensein oder Nichtvorhandensein eines Benutzers an einem Platz, der für Benutzer in einer oder mehreren Einrichtungen verfügbar ist, darstellen;
eine Freiplatzinformation-Erzeugungseinheit (318), die konfiguriert ist, um die Freiplatzinformationen unter Verwendung von Bilddaten, die ein Layout einer oder mehrerer Einrichtungen darstellen, und die Personenerfassungsdaten zu erzeugen;
eine Freiplatzinformation-Sucheinheit (313), die konfiguriert ist, um sich auf eine Freiplatzinformation-Speichereinheit (320) zu beziehen, die Freiplatzinformationen speichert, die von der Freiplatzinformation-Speichereinheit (320) für eine oder mehrere Einrichtungen erzeugt werden, wobei die gespeicherten Freiplatzinformationen einen oder mehrere Plätze umfassen, die nicht von einem Benutzer dieser Einrichtungen besetzt sind, wobei die Plätze für Benutzer verfügbar sind, wenn sie nicht besetzt sind, um Freiplatzinformationen der Einrichtungen innerhalb eines vorbestimmten Bereichs zu erlangen, die die Positionsinformationen des mobilen Endgeräts (200) beinhalten; und
eine Transmittereinheit (315), die konfiguriert ist, um die erlangten Freiplatzinformationen auf das mobile Endgerät (200) zu übertragen
**dadurch gekennzeichnet, dass** die Personenerfassungseinheit (411) konfiguriert ist, um Personenerfassungsdaten durch Erfassen einer Temperaturverteilung in einem Raum in einer oder mehreren Einrichtungen, die beobachtet werden sollen, durch Temperaturen, die von Temperatursensoren (2a bis 2f) erfasst werden, zu erlangen, und die konfiguriert ist, um zu erfassen, wo eine Person vorhanden ist, wobei die Temperaturerfassungssensoren thermophile Elemente (2a) sind, wobei die thermophilen Elemente (2a) durch einen Ring (12) an einer Beleuchtungsvorrichtung (1) angebracht sind, wobei die Beleuchtungsvorrichtung (1) an der Decke des Bereichs der Einrichtung angebracht ist.

2. Informationsverarbeitungsvorrichtung nach Anspruch 1, ferner umfassend:
eine Einrichtungssucheinheit (333), die konfiguriert ist, um sich auf eine Einrichtungsposition-Speichereinheit zu beziehen, die Informationen speichert, welche einen Identifikator darstellen, um jede der Einrichtungen und einen Standort von jeder der Einrichtungen zu identifizieren, um die Identifikatoren der jeweiligen Einrichtungen innerhalb des vorbestimmten Bereichs zu extrahieren, der die Positionsinformationen des mobilen Endgeräts (200) beinhaltet,
wobei in den Freiplatzinformationen jede der Einrichtungen mit dem Identifikator assoziiert ist, der die Einrichtung identifiziert,
wobei die Freiplatzinformation-Sucheinheit (313) die Freiplatzinformationen der Eirichtungen, assoziiert mit den jeweiligen Identifikatoren, die von der Einrichtungssucheinheit extrahiert werden, in der Freiplatzinformation-Speichereinheit (320) erlangt.

3. Informationsverarbeitungsvorrichtung nach Anspruch 1 oder 2, wobei die Freiplatzinformationen Bilddaten sind, um ein Bild anzuzeigen, das ein Layout der Einrichtung darstellt, überlagert mit einem Bild, auf dem ein Vorhandensein eines Benutzers an einer Position des Vorhandenseins angezeigt ist.

4. Informationsverarbeitungsvorrichtung nach einem der Ansprüche 1 bis 3, weiterhin umfassend:
eine Karteninformation-Sucheinheit (321), die konfiguriert ist, um eine Karteninformation-Speichereinheit (320) zu durchzusuchen, die Karteninformationen mittels Positionsinformationen des mobilen Endgeräts (200) speichert, um Karteninformationen zu erlangen, die einen Standort der Einrichtung beinhalten, deren Freiplatzinformationen erlangt wurden,
wobei die Transmittereinheit (315) die von der Karteninformation-Sucheinheit (321) erlangten Freiplatzinformationen und Karteninformationen an das mobile Endgerät (200) überträgt.

5. Informationsverarbeitungsvorrichtung nach einem der Ansprüche 1 bis 4, ferner umfassend:
eine Werbungsinformation-Sucheinheit (322), die konfiguriert ist, um eine Werbungsinformation-Speichereinheit (320) zu durchsuchen, die Werbungsinformationen assoziiert mit einem vorbestimmten Bereich speichert, durch die Positionsinformationen des mobilen Endgeräts (200), um die Werbungsinformationen zu erlangen, die mit dem vorbestimmten Bereich assoziiert sind, einschließlich der Positionsinformationen des mobilen Endgeräts (200),
wobei die Transmittereinheit (315) die Freiplatzinformationen und die von der Werbungsinformation-Sucheinheit (322) erlangten Werbungsinformationen an das mobile Endgerät (200) übertragt.

6. Informationsverarbeitungsvorrichtung nach Anspruch 2, ferner umfassend:
eine Reservierungsinformation-Erlangungseinheit (335), die konfiguriert ist, um sich auf eine Reservierungsinformation-Speichereinheit (320) zu beziehen, in der der Identifikator der Einrichtung mit Reservierungsdaten assoziiert ist, die einen Reservierungsstatus von jedem der Plätze darstellen, die für Benutzer in der Einrichtung verfügbar sind, um die Reservierungsinformationen zu erlangen, die mit dem Identifikator assoziiert sind, der von der Einrichtungssucheinheit (333) extrahiert wurde; und
eine Verifizierungseinheit (337), die konfiguriert ist, um eine erwartete Ankunftszeit in der Einrichtung, die mit dem extrahierten Identifikator assoziiert ist, eine erwartete Verweilzeit in der Einrichtung, die mit dem extrahierten Identifikator assoziiert ist, die Reservierungsinformationen, die durch die von der Reservierungsinformation-Erlangungseinheit (335) erlangt werden, und die Freiplatzinformationen, die von der Freiplatzinformation-Erlangungseinheit (318) erlangt werden, zu verifizieren,
wobei die Verifizierungseinheit (337) die Freiplatzinformationen ausgibt, die die Plätze beinhalten, die während der erwarteten Verweilzeit nicht verfügbar werden.

7. Informationsverarbeitungsvorrichtung nach Anspruch 6, wobei die Verifizierungseinheit (337) die erwartete Ankunftszeit basierend auf den Positionsinformationen des mobilen Endgeräts (200) und den Informationen, die den Standort der Einrichtung darstellen, die mit dem Identifikator assoziiert ist, berechnet.

8. Informationsverarbeitungsvorrichtung nach Anspruch 6 oder 7, wobei die erwartete Verweilzeit eine im Voraus festgelegte Zeit oder eine in das mobile Endgerät (200) eingegebene Zeit ist.

9. Verfahren umfassend: Erhalten von Positionsinformationen eines mobilen Endgeräts (200) durch eine Endgerätpositionsinformation-Erlangungseinheit (312), Erlangen von Personenerfassungsdaten durch eine Personenerfassungseinheit (411), Darstellen eines Vorhandenseins oder Nichtvorhandenseins eines Benutzers an einem Platz, der für Benutzer in einer oder mehreren Einrichtungen verfügbar ist, Erzeugen der Freiplatzinformationen durch eine Freiplatzinformation-Erzeugungseinheit (318) unter Verwendung von Bilddaten, die ein Layout der einen oder der mehreren Einrichtungendarstellen, und der Personenerfassungsdaten, Bezugnehmen durch eine Freiplatzinformation-Sucheinheit (313) auf eine Freiplatzinformation-Speichereinheit (320), die Freiplatzinformationen speichert, die von der Freiplatzinformation-Speichereinheit (320) für eine oder mehrere Einrichtungen erzeugt werden, wobei die gespeicherten Freiplatzinformationen einen oder mehrere Plätze beinhalten, die nicht von einem Benutzer in jeder der Einrichtungen besetzt sind, wobei die Plätze für Benutzer verfügbar, wenn sie nicht besetzt sind, um die Freiplatzinformationen der Einrichtungen innerhalb eines vorbestimmten Bereichs zu erlangen, einschließlich der Positionsinformationen des mobilen Endgeräts (200), Übertragen durch eine Transmittereinheit der erlangten Freiplatzinformationen an das mobile Endgerät, wobei das Verfahren **dadurch gekennzeichnet ist, dass** ein Erlangen von Personenerfassungsdaten durch die Personenerfassungseinheit (411) durch Erfassen einer Temperaturverteilung eines Raums in einer oder mehreren Einrichtungen, die beobachtet werden sollen, durch Temperaturen, die von Temperatursensoren (2a-2f) erfasst werden, erfolgt, und konfiguriert ist, um zu erfassen, wo eine Person vorhanden ist, wobei die Temperaturerfassungssensoren thermophile Elemente (2a) sind, wobei die thermophilen Elemente (2a) mit einem Ring an der Beleuchtungsvorrichtung (1) angebracht sind, wobei die Beleuchtungsvorrichtung an der Decke des Bereichs der Einrichtung angebracht ist.

## Revendications

1. Système de traitement d'informations, comprenant :
une unité d'obtention d'informations de position de terminal (312) configurée de manière à obtenir des informations de position d'un terminal mobile (200) ;
une unité de détection de personnes (411) configurée de manière à obtenir des données de détection de personnes représentant l'existence ou l'inexistence d'un utilisateur à une place disponible pour des utilisateurs dans une ou plusieurs installations ;
une unité de génération d'informations d'espace vide (318) configurée de manière à générer les informations d'espace vide, en utilisant des données d'image représentant une disposition de ladite une ou desdites plusieurs installations et les données de détection de personnes ;
une unité de recherche d'informations d'espace vide (313) configurée de manière à faire référence à une unité de stockage d'informations d'espace vide (320) stockant des informations d'espace vide générées par l'unité de stockage d'informations d'espace vide (320) pour une ou plusieurs installations, les informations d'espace vide stockées incluant une ou plusieurs places non occupées par un utilisateur dans chacune des installations, les places étant accessibles à des utilisateurs, dès lors qu'elles ne sont pas occupées, de manière à obtenir les informations d'espace vide des installations dans une plage prédéterminée incluant les informations de position du terminal mobile (200) ; et
une unité émettrice (315) configurée de manière à transmettre les informations d'espace vide obtenues au terminal mobile (200) ;
**caractérisé en ce que** l'unité de détection de personnes (411) est configurée de manière à obtenir des données de détection de personnes en détectant une distribution thermique de l'espace dans ladite une ou lesdites plusieurs installations à observer, par des températures détectées par des capteurs de détection de température (2a à 2f), et est configurée de manière à détecter l'endroit où une personne existe, dans lequel les capteurs de détection de température sont des thermopiles (2a), dans lequel les thermopiles (2a) sont fixées à un dispositif d'éclairage (1) par une bague (12), dans lequel le dispositif d'éclairage (1) est disposé sur le plafond de la zone de l'installation.

2. Appareil de traitement d'informations selon la revendication 1, comprenant en outre :
une unité de recherche d'installations (333) configurée de manière à faire référence à une unité de stockage de position d'installations stockant des informations représentant un identificateur destiné à identifier chacune des installations et un emplacement de chacune des installations, de manière à extraire les identificateurs des installations respectives dans la plage prédéterminée incluant les informations de position du terminal mobile (200) ;
dans lequel les informations d'espace vide présentent chacune des installations associées à l'identificateur identifiant l'installation ;
dans lequel l'unité de recherche d'informations d'espace vide (313) obtient les informations d'espace vide des installations associées aux identificateurs respectifs extraits par l'unité de recherche d'installations, dans l'unité de stockage d'informations d'espace vide (320).

3. Appareil de traitement d'informations selon la revendication 1 ou 2, dans lequel les informations d'espace vide sont des données d'image pour afficher une image représentant une disposition de l'installation, superposée à une image dans laquelle l'existence d'un utilisateur est indiquée à une position de l'existence.

4. Appareil de traitement d'informations selon l'une quelconque des revendications 1 à 3, comprenant en outre :
une unité de recherche d'informations cartographiques (321) configurée de manière à rechercher dans une unité de stockage d'informations cartographiques (320) stockant des informations cartographiques par le biais des informations de position du terminal mobile (200), de manière à obtenir des informations cartographiques qui incluent un emplacement de l'installation dont les informations d'espace vide ont été obtenues ;
dans lequel l'unité émettrice (315) transmet les informations d'espace vide et les informations cartographiques obtenues par l'unité de recherche d'informations cartographiques (321), au terminal mobile (200).

5. Appareil de traitement d'informations selon l'une quelconque des revendications 1 à 4, comprenant en outre :
une unité de recherche d'informations publicitaires (322) configurée de manière à rechercher dans une unité de stockage d'informations publicitaires (320) stockant des informations publicitaires associées à une zone prédéterminée, par le biais des informations de position du terminal mobile (200), de manière à obtenir les informations publicitaires associées à la zone prédéterminée incluant les informations de position du terminal mobile (200) ;
dans lequel l'unité émettrice (315) transmet les informations d'espace vide et les informations publicitaires obtenues par l'unité de recherche d'informations publicitaires (322), au terminal mobile (200).

6. Appareil de traitement d'informations selon la revendication 2, comprenant en outre :
une unité d'obtention d'informations de réservation (335) configurée de manière à faire référence à une unité de stockage d'informations de réservation (320) dans laquelle l'identificateur de l'installation est associé à des données de réservation représentant un état de réservation de chacune des places disponibles pour des utilisateurs dans l'installation, de manière à d'obtenir les informations de réservation associées à l'identificateur extrait par l'unité de recherche d'installations (333) ; et
une unité de vérification (337) configurée de manière à vérifier une heure d'arrivée prévue à l'installation associée à l'identificateur extrait, une durée de séjour prévue au niveau de l'installation associée à l'identificateur extrait, les informations de réservation obtenues par l'unité d'obtention d'informations de réservation (335), et les informations d'espace vide obtenues par l'unité d'obtention d'informations d'espace vide (318) ;
dans lequel l'unité de vérification (337) fournit en sortie les informations d'espace vide incluant les places qui devraient devenir indisponibles pendant la durée de séjour prévue.

7. Appareil de traitement d'informations selon la revendication 6, dans lequel l'unité de vérification (337) calcule l'heure d'arrivée prévue, sur la base des informations de position du terminal mobile (200) et des informations représentant l'emplacement de l'installation associée à l'identificateur.

8. Appareil de traitement d'informations selon la revendication 6 ou 7, dans lequel la durée de séjour prévue correspond à un temps défini à l'avance, ou à un temps entré sur le terminal mobile (200).

9. Procédé comprenant les étapes ci-après consistant à : obtenir des informations de position d'un terminal mobile (200), par le biais d'une unité d'obtention d'informations de position de terminal (312), obtenir des données de détection de personnes, par le biais d'une unité de détection de personnes (411), représentant l'existence ou l'inexistence d'un utilisateur à une place disponible pour des utilisateurs dans une ou plusieurs installations, générer, par le biais d'une unité de génération d'informations d'espace vide (318), les informations d'espace vide, en utilisant des données d'image représentant une disposition de ladite une ou desdites plusieurs installations et les données de détection de personnes, faire référence, par le biais d'une unité de recherche d'informations d'espace vide (313), à une unité de stockage d'informations d'espace vide (320) stockant des informations d'espace vide générées par l'unité de stockage d'informations d'espace vide (320) pour une ou plusieurs installations, les informations d'espace vide stockées incluant une ou plusieurs places non occupées par un utilisateur dans chacune des installations, les places étant accessibles à des utilisateurs, dès lors qu'elles ne sont pas occupées, de manière à obtenir les informations d'espace vide des installations dans une plage prédéterminée incluant les informations de position du terminal mobile (200), et transmettre, par le biais d'une unité émettrice, les informations d'espace vide obtenues au terminal mobile, le procédé étant **caractérisé par** l'étape consistant à obtenir, par le biais de l'unité de détection de personnes (411), des données de détection de personnes, en détectant une distribution thermique de l'espace dans ladite une ou lesdites plusieurs installations à observer, par des températures détectées par des capteurs de détection de température (2a-2f), et à détecter l'endroit où une personne existe, dans lequel les capteurs de détection de température sont des thermopiles (2a), dans lequel les thermopiles (2a) sont fixées à un dispositif d'éclairage (1) par une bague, dans lequel le dispositif d'éclairage est disposé sur le plafond de la zone de l'installation.
